# EUROPEAN PATENT APPLICATION

(11) **EP 3 893 093 A1**
(43) Date of publication of application: **13.10.2021**
(21) Application number: 19912320.9
(22) Date of filing: 08.11.2019
(51) Int. Cl.: G06F 3/041, H04M 1/02

(54) **SUPPORT SHEET FOR FOLDABLE TERMINAL DEVICE, AND FOLDABLE TERMINAL DEVICE**

(30) Priority: 01.02.2019 CN 201910105747; 25.04.2019 CN 201910340873
(71) Applicant: Huawei Technologies Co., Ltd., Shenzhen Guangdong 518129 (CN)
(72) Inventor: LIAO, Jenhui, Shenzhen, Guangdong 518129 (CN)
(74) Representative: Isarpatent
(86) International application number: PCT/CN2019/116625
(87) International publication number: WO 2020/155736

(57) **Abstract**

This application provides a support sheet used for a foldable terminal device and a foldable terminal device, and relates to the field of terminal device technologies, so that surface flatness of a terminal device can be improved without limiting a bending activity of the terminal device. The terminal device includes a flexible display screen and a support sheet disposed on one side of the flexible display screen. The support sheet includes at least one bendable area, a plurality of gaps are disposed in the at least one bendable area, each gap has at least one opening, and an orientation of at least one opening in each gap is the same as a bending direction of a bendable area in which the gap is located. When the bendable area of the support sheet is bent, the gap can absorb stress generated when the bendable area is bent, and the bending activity of the terminal device is not limited. In addition, the support sheet can provide a support function for the flexible display screen, which improves the surface flatness of the terminal device. The terminal device provided in this application is foldable and has functions such as providing a large size display and ease of carrying.

## Description

This application claims priority to Chinese Patent Application No. 201910105747.6, filed with the China National Intellectual Property Administration on February 01, 2019, and entitled "SUPPORT SHEET USED FOR FOLDABLE TERMINAL DEVICE AND FOLDABLE TERMINAL DEVICE", and Chinese Patent Application No. 201910340873.X, filed with the China National Intellectual Property Administration on April 25, 2019, and entitled "SUPPORT SHEET USED FOR FOLDABLE TERMINAL DEVICE AND FOLDABLE TERMINAL DEVICE", which are incorporated herein by reference in their entireties.

### TECHNICAL FIELD

This application relates to the field of terminal device technologies, and in particular, to a support sheet used for a foldable terminal device and a foldable terminal device.

### BACKGROUND

A foldable terminal device can meet a requirement of a user on a large screen size and avoid problems of a large volume and a difficulty in portability that are caused by the large screen, and is one of current development trends of the terminal device field.

The foldable terminal device usually includes a flexible display screen. Because the flexible display screen is relatively flexible, surface flatness of the flexible display screen is relatively low, and a wavy pattern is likely to occur on a surface of the flexible display screen. Consequently, quality of a displayed image is affected.

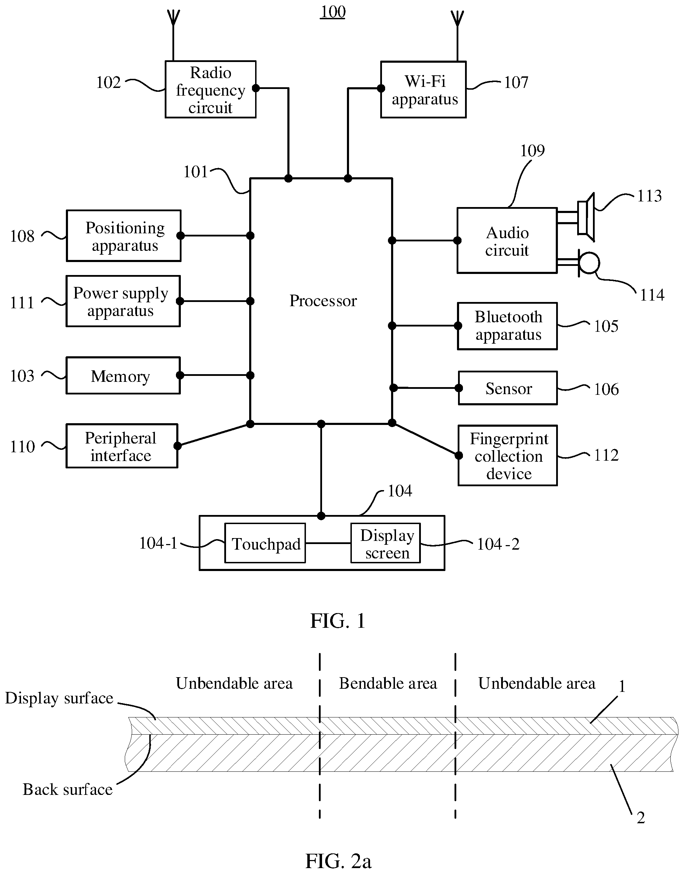

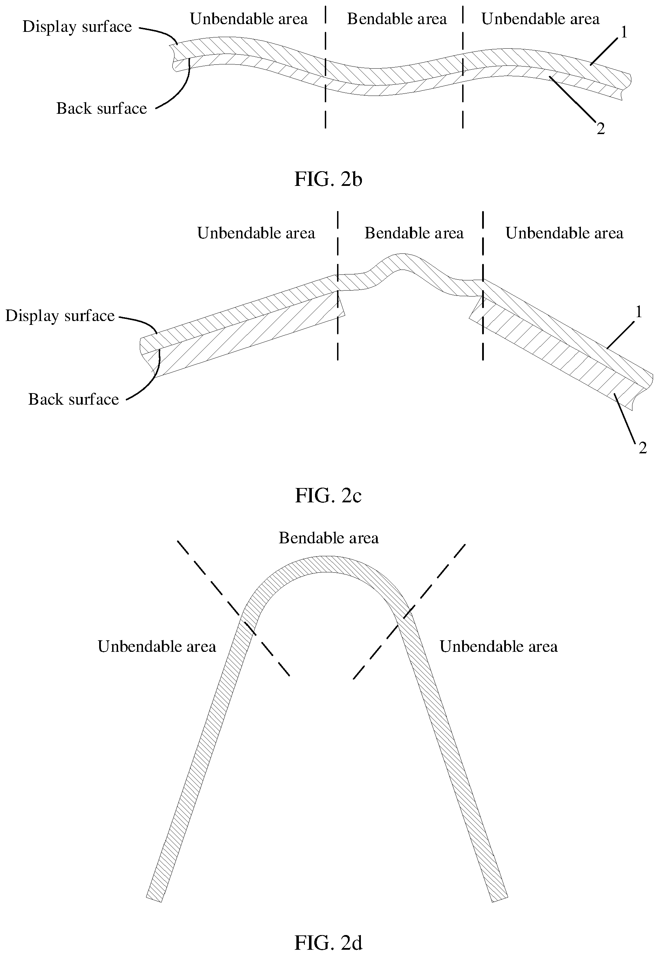

In some related technologies, as shown in FIG. 2a and FIG. 2b, to improve surface flatness of a flexible display screen 1, a support sheet 2 is disposed on one side of the flexible display screen 1 to support the flexible display screen 1. However, as shown in FIG. 2a, if the support sheet 2 is excessively thick, a bending activity of the flexible display screen 1 is limited. As shown in FIG. 2b, if the support sheet 2 is excessively thin, although the bending activity of the flexible display screen 1 is not limited, mechanical strength of the excessively thin support sheet 2 is insufficient, and the surface flatness of the flexible display screen 1 cannot be effectively improved.

### SUMMARY

This application provides a support sheet used for a foldable terminal device and a foldable terminal device, which can improve surface flatness of a terminal device without limiting a bending activity of the terminal device.

To achieve the foregoing objective, the following technical solutions are used in this application.

According to a first aspect, this application provides a support sheet. The support sheet includes at least one bendable area, a plurality of gaps are disposed in the at least one bendable area, each gap has at least one opening, and an orientation of at least one opening in each gap is the same as a bending direction of a bendable area in which the gap is located. In this way, when the support sheet is applied to a terminal device, the support sheet is located on one side of a flexible display screen included in the terminal device. When the bendable area of the support sheet is bent, the gap can absorb stress generated during bending, and does not limit a bending activity of the terminal device. In addition, in an area, except a gap area, in the bendable area of the support sheet, mechanical strength of the bendable area of the support sheet can be enhanced, so that a part that is of the flexible display screen and that corresponds to the bendable area of the support sheet can be better supported, which helps improve flatness of an entire surface of the terminal device.

With reference to the first aspect, in a first possible implementation, the gap passes through two opposite primary surfaces of the bendable area of the support sheet. In this way, the gap can have a capability of absorbing stress relatively strongly, which ensures more effectively that the bending activity of the bendable area is not limited when the bendable area of the support sheet is bent. In addition, such the gap can enable the bendable area of the support sheet to be bent in a bidirectional manner.

With reference to the first aspect, in a second possible implementation, the gap is a groove disposed in the bendable area of the support sheet. In this way, flatness of the primary surface that is in the support sheet and that is opposite to the opening of the gap is improved, so that the surface flatness of the bendable area is further improved while it is ensured that the bending activity of the bendable area is not limited.

With reference to the second possible implementation of the first aspect, in a third possible implementation, the gap includes a bottom surface and an inner side wall surface, and smooth transition exists between the bottom surface and the inner side wall surface. In this way, stress concentration at a corner position at which the inner side wall surface intersects with the bottom surface is avoided, which helps improve a useful life of the support sheet.

With reference to the second possible implementation of the first aspect, in a fourth possible implementation, a proportion of a depth of the gap to a thickness of the support sheet ranges from 77/80 to 97/100. Such a size proportion design helps further improve the surface flatness of the bendable area on a premise that it is ensured that the bending activity of the bendable area is not limited.

With reference to the first aspect, in a fifth possible implementation, a cross section shape of the gap is a rectangle, a trapezoid, a U-like shape, a semi-circle, a triangle, or the like. A cross section shape is a cross section shape obtained after the gap is truncated along a length extension direction perpendicular to the bendable area in which the gap is located and in a direction perpendicular to a primary surface of the support sheet. In this way, several possible implementation forms of the cross section shape of the gap are provided. Certainly, the cross section shape of the gap is not limited thereto.

With reference to the first aspect, in a sixth possible implementation, the inner side wall surface of the gap is a planar surface, a stepped surface, an arc surface, a curved surface, a wavy surface, or the like. In this way, several possible implementation forms of a shape of the inner side wall surface of the gap are provided. Certainly, the shape of the inner side wall surface of the gap is not limited thereto.

With reference to the first aspect, in a seventh possible implementation, a planar surface shape of the gap is a strip shape, a hole shape, or a rhombus shape. The planar surface shape of the gap is a shape of an orthographic projection of the gap on the primary surface of the support sheet. In this way, several possible implementation forms of the planar surface shape of the gap are provided. Certainly, the planar surface shape of the gap is not limited thereto.

With reference to the seventh possible implementation of the first aspect, in an eighth possible implementation, a plurality of parallel strip shape gaps are disposed in the bendable area, and a length extension direction of each gap is parallel to the length extension direction of the bendable area. In this way, stress absorbed by each area in the bendable area is more even, thereby better supporting the bending activity of the terminal device.

With reference to the seventh possible implementation of the first aspect, in a ninth possible implementation, a plurality of rows of gaps are disposed in the bendable area, and each row of gaps includes a plurality of gaps that are arranged at intervals. An arrangement direction of the plurality of gaps included in each row of gaps is parallel to the length extension direction of the bendable area. Each gap is a strip shape, which helps improve mechanical strength of the bendable area, and can well absorb stress generated during bending. Alternatively, each gap is a circular hole shape or an elliptical hole shape, which helps improve the mechanical strength of the bendable area, avoids stress concentration at a corner of the inner side wall surface of the gap, and improves a useful life of the support sheet. Alternatively, each row of gaps includes at least one gap in a strip shape and a plurality of gaps in a circular hole shape or in an elliptical hole shape, and at least one gap in a circular hole shape or in an elliptical hole shape is separately disposed on two sides of each strip gap, which helps improve the mechanical strength of the bendable area, better absorbs stress generated during bending, avoids stress concentration at a corner of an inner side wall surface of the strip gap, and improves a useful life of the support sheet. Alternatively, each row of gaps includes a plurality of gaps in a rhombus shape, which helps improve the mechanical strength of the bendable area, and can further improve a capability of absorbing stress generated during bending.

With reference to the ninth possible implementation of the first aspect, in a tenth possible implementation, in a direction perpendicular to the length extension direction of the bendable area, a plurality of gaps included in two adjacent rows of gaps are disposed in a staggered manner. This helps avoid relatively concentrated stress on the support sheet during bending, so that stress on each position of the support sheet is even, and reliability when the support sheet is bent is improved.

With reference to the first aspect, in an eleventh possible implementation, the support sheet further includes at least one unbendable area, and a thickness of a non-gap area in the bendable area of the support sheet is less than or equal to a thickness of the unbendable area of the support sheet. In this way, on a premise of improving the mechanical strength of the bendable area, bending performance of the support sheet can be improved, so that the support sheet has a relatively large bending angle.

With reference to the first aspect, in a twelfth possible implementation, in a direction perpendicular to the primary surface of the support sheet, and two sides of the support sheet are respectively a first side and a second side, the bendable area can be bent towards the first side or the second side. In the plurality of gaps disposed in the bendable area, each gap passes through two opposite primary surfaces of the bendable area, or each gap is a groove disposed in the bendable area. An opening of each gap faces the first side or the second side. In this way, several manners of implementing unidirectional bending of the bendable area are provided. Certainly, the manner of implementing unidirectional bending of the bendable area is not limited thereto.

With reference to the first aspect, in a thirteenth possible implementation, in a direction perpendicular to the primary surface of the support sheet, and two sides of the support sheet are respectively a first side and a second side, the bendable area can be separately bent towards the first side and the second side. In the plurality of gaps disposed in the bendable area, each gap passes through two opposite primary surfaces of the bendable area, or each gap is a groove disposed in the bendable area, openings of some gaps face the first side, and openings of some other gaps face the second side. In addition, the gaps whose openings face the first side and the gaps whose openings face the second side are alternately arranged at intervals. In this way, several manners of implementing bidirectional bending of the bendable area are provided. Certainly, the manner of implementing bidirectional bending of the bendable area is not limited thereto.

With reference to the first aspect, in a fourteenth possible implementation, the plurality of gaps disposed in the bendable area of the support sheet are a plurality of gaps produced by using an etching process. Alternately, the support sheet includes a first base material and a second base material superposed on a side surface of the first base material, and an area that is of the second base material and that corresponds to a to-be-formed gap area is hollowed out, to cooperate with the first base material to form the plurality of gaps disposed in the bendable area of the support sheet. Stress on each position of the support sheet that is obtained through production in this manner is even, and surface flatness is high.

With reference to the first aspect, in a fifteenth possible implementation, the support sheet further includes at least one unbendable area, and a thickness of a non-gap area in the bendable area of the support sheet is less than or equal to a thickness of the unbendable area. This helps improve flatness of an entire surface of the terminal device.

With reference to the first aspect, in a sixteenth possible implementation, the support sheet is a metal support sheet, to improve mechanical strength of the support sheet from a material aspect.

With reference to the first aspect, in a seventeenth possible implementation, a thickness of the support sheet is greater than 0.05 mm and less than or equal to 0.5 mm, to effectively ensure the mechanical strength of the support sheet, so that the support piece better supports the flexible display screen.

According to a second aspect, this application provides a terminal device. The terminal device includes a flexible display screen and a support sheet disposed on one side of the flexible display screen. The support sheet is the support sheet according to any one of the first aspect and the first implementation to the fifteenth possible implementation of the first aspect. The foregoing terminal device is configured as a foldable terminal device, and a plurality of gaps are disposed in a bendable area of the support sheet included in the terminal device. When the terminal device is bent, these gaps can absorb stress generated when the terminal device is bent. Therefore, the support sheet does not limit a bending activity of the terminal device, and the support sheet can support the flexible display screen of the terminal device, so that surface flatness of the terminal device is improved, and display quality of the terminal device is improved.

With reference to the second aspect, in a first possible implementation, the gap of the support sheet passes through two opposite primary surfaces of the bendable area of the support sheet. In this way, the gap can have a capability of absorbing stress relatively strongly, which ensures more effectively that the bending activity of the bendable area is not limited when the bendable area of the support sheet is bent. In addition, such the gap can enable the bendable area of the support sheet to be bent in a bidirectional manner.

With reference to the second aspect, in a second possible implementation, the gap of the support sheet is a groove disposed in the bendable area of the support sheet. In this way, flatness of the primary surface that is in the support sheet and that is opposite to an opening of the gap is improved, so that the surface flatness of the bendable area is further improved while it is ensured that the bending activity of the bendable area is not limited.

With reference to the second possible implementation of the second aspect, in a third possible implementation, the gap of the support sheet includes a bottom surface and an inner side wall surface, and smooth transition exists between the bottom surface and the inner side wall surface. In this way, stress concentration at a corner position at which the inner side wall surface intersects with the bottom surface is avoided, which helps improve a useful life of the support sheet.

With reference to the second possible implementation of the second aspect, in a fourth possible implementation, a proportion of a depth of the gap of the support sheet to a thickness of the support sheet ranges from 77/80 to 97/100. Such a size proportion design helps further improve the surface flatness of the bendable area on a premise that it is ensured that the bending activity of the bendable area is not limited.

With reference to the second aspect, in a fifth possible implementation, a cross section shape of the gap of the support sheet is a rectangle, a trapezoid, a U-like shape, a semi-circle, a triangle, or the like. A cross section shape is a cross section shape obtained after the gap is truncated along a length extension direction perpendicular to the bendable area in which the gap is located and in a direction perpendicular to a primary surface of the support sheet. In this way, several possible implementation forms of the cross section shape of the gap are provided. Certainly, the cross section shape of the gap is not limited thereto.

With reference to the second aspect, in a sixth possible implementation, the inner side wall surface of the gap of the support sheet is a planar surface, a stepped surface, an arc surface, a curved surface, a wavy surface, or the like. In this way, several possible implementation forms of a shape of the inner side wall surface of the gap are provided. Certainly, the shape of the inner side wall surface of the gap is not limited thereto.

With reference to the second aspect, in a seventh possible implementation, a planar surface shape of the gap is a strip shape, a hole shape, or a rhombus shape. The planar surface shape of the gap is a shape of an orthographic projection of the gap on the primary surface of the support sheet. In this way, several possible implementation forms of the planar surface shape of the gap are provided. Certainly, the planar surface shape of the gap is not limited thereto.

With reference to the seventh possible implementation of the second aspect, in an eighth possible implementation, a plurality of parallel strip shape gaps are disposed in the bendable area of the support sheet, and a length extension direction of each gap is parallel to the length extension direction of the bendable area. In this way, stress absorbed by each area in the bendable area is more even, thereby better supporting the bending activity of the terminal device.

With reference to the seventh possible implementation of the second aspect, in a ninth possible implementation, a plurality of rows of gaps are disposed in the bendable area of the support sheet, and each row of gaps includes a plurality of gaps that are arranged at intervals. An arrangement direction of the plurality of gaps included in each row of gaps is parallel to the length extension direction of the bendable area. Each gap is a strip shape, which helps improve mechanical strength of the bendable area, and can well absorb stress generated during bending. Alternatively, each gap is a circular hole shape or an elliptical hole shape, which helps improve the mechanical strength of the bendable area, avoids stress concentration at a corner of the inner side wall surface of the gap, and improves a useful life of the support sheet. Alternatively, each row of gaps includes at least one gap in a strip shape and a plurality of gaps in a circular hole shape or in an elliptical hole shape, and at least one gap in a circular hole shape or in an elliptical hole shape is separately disposed on two sides of each strip gap, which helps improve the mechanical strength of the bendable area, better absorbs stress generated during bending, avoids stress concentration at a corner of an inner side wall surface of the strip gap, and improves a useful life of the support sheet. Alternatively, each row of gaps includes a plurality of gaps in a rhombus shape, which helps improve the mechanical strength of the bendable area, and can further improve a capability of absorbing stress generated during bending.

With reference to the ninth possible implementation of the second aspect, in a tenth possible implementation, in a direction perpendicular to the length extension direction of the bendable area, a plurality of gaps included in two adjacent rows of gaps are disposed in a staggered manner. This helps avoid relatively concentrated stress on the support sheet during bending, so that stress on each position of the support sheet is even, and reliability when the support sheet is bent is improved.

With reference to the second aspect, in an eleventh possible implementation, the support sheet further includes at least one unbendable area, and a thickness of a non-gap area in the bendable area of the support sheet is less than or equal to a thickness of the unbendable area of the support sheet. In this way, on a premise of meeting the mechanical strength of the bendable area, bending performance of the support sheet can be improved, so that the support sheet has a relatively large bending angle.

With reference to the second aspect, in a twelfth possible implementation, in a direction perpendicular to the primary surface of the support sheet, and two sides of the support sheet are respectively a first side and a second side, the bendable area can be bent towards the first side or the second side. In the plurality of gaps disposed in the bendable area, each gap passes through two opposite primary surfaces of the bendable area, or each gap is a groove disposed in the bendable area. An opening of each gap faces the first side or the second side. In this way, several manners of implementing unidirectional bending of the bendable area are provided. Certainly, the manner of implementing unidirectional bending of the bendable area is not limited thereto.

With reference to the second aspect, in a thirteenth possible implementation, in a direction perpendicular to the primary surface of the support sheet, and two sides of the support sheet are respectively a first side and a second side, the bendable area can be separately bent towards the first side and the second side. In the plurality of gaps disposed in the bendable area, each gap passes through two opposite primary surfaces of the bendable area, or each gap is a groove disposed in the bendable area, openings of some gaps face the first side, and openings of some other gaps face the second side. In addition, the gaps whose openings face the first side and the gaps whose openings face the second side are alternately arranged at intervals. In this way, several manners of implementing bidirectional bending of the bendable area are provided. Certainly, the manner of implementing bidirectional bending of the bendable area is not limited thereto.

With reference to the second aspect, in a fourteenth possible implementation, the plurality of gaps disposed in the bendable area of the support sheet are a plurality of gaps produced by using an etching process. Alternately, the support sheet includes a first base material and a second base material superposed on a side surface of the first base material, and an area that is of the second base material and that corresponds to a to-be-formed gap area is hollowed out, to cooperate with the first base material to form the plurality of gaps disposed in the bendable area of the support sheet. Stress on each position of the support sheet that is obtained through production in this manner is even, and surface flatness is high.

With reference to the second aspect, in a fifteenth possible implementation, the support sheet further includes at least one unbendable area, and a thickness of a non-gap area in the bendable area of the support sheet is less than or equal to a thickness of the unbendable area. This helps improve flatness of an entire surface of the terminal device.

With reference to the second aspect, in a sixteenth possible implementation, the support sheet is a metal support sheet, to improve mechanical strength of the support sheet from a material aspect.

With reference to the second aspect, in a seventeenth possible implementation, a thickness of the support sheet is greater than 0.05 mm and less than or equal to 0.5 mm, to effectively ensure the mechanical strength of the support sheet, so that the support piece better supports the flexible display screen.

### BRIEF DESCRIPTION OF DRAWINGS

FIG. 1 is a diagram of a system architecture of a terminal device according to some embodiments of this application;
FIG. 2a to FIG. 2c are structural diagrams of three cross sections of a terminal device in a related technology;
FIG. 2d and FIG. 2e are schematic diagrams of two flexible display screens that have different surface flatness;
FIG. 3a and FIG. 3b are schematic diagrams of three-dimensional structures from two different visual angles when a terminal device is unfolded according to some embodiments of this application;
FIG. 3c and FIG. 3d are schematic diagrams of three-dimensional structures from two different visual angles when a terminal device is bent in FIG. 3a;
FIG. 4a to FIG. 4d are sectional diagrams of four structures when a bendable area of a support sheet is bent according to some embodiments of this application;
FIG. 5a to FIG. 5l are sectional diagrams of 12 cross section shapes of a gap of a support sheet according to some embodiments of this application;
FIG. 6a to FIG. 6e are schematic diagrams of five planar surface shapes of a gap of a support sheet according to some embodiments of this application;
FIG. 7a to FIG. 7c are schematic diagrams of three arrangement manners of a gap of a support sheet according to some embodiments of this application;
FIG. 8a to FIG. 8f are schematic diagrams of six bending manners of a support sheet according to some embodiments of this application;
FIG. 9a to FIG. 9c are schematic diagrams of three different states when a terminal device is a mobile phone according to some embodiments of this application;
FIG. 9d is a schematic diagram of a bending state when a terminal device is a tablet computer according to some embodiments of this application;
FIG. 9e is a schematic diagram of a bending state when a terminal device is an electronic book according to some embodiments of this application; and
FIG. 10 is a structural diagram of a cross section of a support sheet according to some embodiments of this application.

### DESCRIPTION OF EMBODIMENTS

The following describes embodiments of this application with reference to accompanying drawings.

The embodiments of this application provide a support sheet and a terminal device. The provided terminal device may be any terminal such as a mobile phone, a wearable device, an AR (Augmented Reality, augmented reality)/VR (Virtual Reality, virtual reality) device, a tablet computer, a notebook computer, a UMPC (Ultra-mobile Personal Computer, ultra-mobile personal computer), a netbook, or a PDA (Personal Digital Assistant, personal digital assistant). This is not limited in the embodiments of this application.

As shown in FIG. 1, in some embodiments of this application, the provided terminal device may be a mobile phone 100. The following describes a structure of the terminal device by using the mobile phone 100 as an example.

As shown in FIG. 1, the mobile phone 100 may specifically include components such as a processor 101, a radio frequency (Radio Frequency, RF for short) circuit 102, a memory 103, a touchscreen 104, a Bluetooth apparatus 105, one or more sensors 106, a Wi-Fi apparatus 107, a positioning apparatus 108, an audio circuit 109, a peripheral interface 110, and a power supply apparatus 111. These components may communicate with each other by using one or more communications buses or signal cables (not shown in FIG. 1). A person skilled in the art may understand that the hardware structure shown in FIG. 1 does not constitute a limitation on the mobile phone 100. The mobile phone 100 may include more or fewer components than those shown in FIG. 1, or combine some components, or have different component arrangements.

The following describes the components of the mobile phone 100 in detail with reference to FIG. 1.

The processor 101 is a control center of the mobile phone 100. The processor 101 is connected to all the components of the mobile phone 100 by using various interfaces and lines, and execute various functions of the mobile phone 100 and process data by running or executing an application program (App for short) stored in the memory 103 and by invoking data stored in the memory 103. In some embodiments, the processor 101 may include one or more processing units. For example, the processor 101 may be a Kirin 960 chip manufactured by Huawei.

The radio frequency circuit 102 may be configured to receive and send a radio signal in an information receiving and sending process or in a call process. Particularly, the radio frequency circuit 102 may receive downlink data from a base station, and then send the downlink data to the processor 101 for processing. In addition, the radio frequency circuit 102 sends related uplink data to the base station. The radio frequency circuit usually includes but is not limited to an antenna, at least one amplifier, a transceiver, a coupler, a low noise amplifier, a duplexer, and the like. In addition, the radio frequency circuit 102 may further communicate with another device through wireless communication. The wireless communication may be implemented by using any communications standard or protocol, including but not limited to a global system for mobile communications, a general packet radio service, code division multiple access, wideband code division multiple access, long term evolution, an email, a short message service, and the like.

The memory 103 is configured to store an application program and data. The processor 101 executes various functions of the mobile phone 100 and process data by running the application program and the data that are stored in the memory 103. The memory 103 mainly includes a program storage area and a data storage area. The program storage area may store an operating system and an application program required by at least one function (such as a sound playback function or an image playback function). The data storage area may store data (such as audio data and a phone book) created when the mobile phone 100 is used. In addition, the memory 103 may include a high-speed random access memory, and may further include a non-volatile memory such as a magnetic disk storage device, a flash memory, or another volatile solid-state storage device. The memory 103 may store various operating systems such as an iOS operating system developed by Apple and an Android operating system developed by Google.

The touchscreen 104 may include a touchpad 104-1 and a display screen 104-2. The touchpad 104-1 may collect a touch event performed by a user of the mobile phone 100 on or near the touchpad 104-1 (for example, an operation performed by the user on the touchpad 104-1 or near the touchpad 104-1 by using any proper object such as a finger or a stylus), and send collected touch information to another component such as the processor 101.

The touch event performed by the user near the touchpad 104-1 may be referred to as a floating touch. The floating touch may mean that the user does not need to directly touch the touchpad to select, move, or drag an object (such as an icon), but the user only needs to be located near the terminal to execute a desired function. In an application scenario of the floating touch, terms such as "touch" and "contact" do not implicitly refer to directly touching the touchscreen, but refer to a touch near or close to the touchscreen.

Specifically, two capacitive sensors: a mutual-capacitance sensor and a self-capacitance sensor may be disposed on the touchpad 104-1. The two capacitive sensors may be alternately arranged on the touchpad 104-1. The mutual-capacitance sensor is configured to implement a normal conventional multi-point touch, in other words, detect a gesture when the user touches the touchpad 104-1. The self-capacitance sensor can generate a signal stronger than that of the mutual-capacitance, to detect finger sensing farther from the touchpad 104-1. Therefore, when a finger of the user hovers over a screen, because the signal generated by the self-capacitance sensor is stronger than the signal generated by the mutual-capacitance sensor, the mobile phone 100 can detect a gesture of the user above the screen, for example, at a position above the touchpad 104-1 by 20 mm.

Optionally, the touchpad 104-1 that can support the floating touch may be implemented in a capacitive type, an infrared light sensing type, an ultrasonic wave type, or the like. In addition, the touchpad 104-1 may be implemented in a plurality of types such as a resistive type, a capacitive type, an infrared type, and a surface acoustic wave type. The display screen 104-2 may be configured to display information entered by the user, information provided for the user, and various menus of the mobile phone 100. The display screen 104-2 can be configured in a form of a liquid crystal display, an organic light emitting diode, or the like. The touchpad 104-1 may cover the display screen 104-2. After detecting the touch event on or near the touchpad 104-1, the touchpad 104-1 transmits the touch event to the processor 101 to determine a type of the touch event. Then, the processor 101 may provide a corresponding visual output on the display screen 104-2 based on the type of the touch event.

Although the touchpad 104-1 and the display screen 104-2 are used as two independent components to implement input and output functions of the mobile phone 100 in FIG. 1, the touchpad 104-1 and the display screen 104-2 may be integrated to implement the input and output functions of the mobile phone 100 in some embodiments.

It may be understood that the touchscreen 104 is formed by stacking materials of a plurality of layers. Only the touchpad (layer) and the display screen (layer) are displayed in this embodiment of this application, and another layer is not recorded in this embodiment of this application. In addition, in some other embodiments of this application, the touchpad 104-1 may cover the display screen 104-2, and a size of the touchpad 104-1 is greater than a size of the display screen 104-2, so that the display screen 104-2 is entirely covered by the touchpad 104-1. Alternatively, the touchpad 104-1 may be configured on the front of the mobile phone 100 in a full panel form. In other words, any touch performed by the user on the front of the mobile phone 100 can be sensed by the mobile phone. In this way, full touch experience on the front of the mobile phone can be implemented. In some other embodiments, the touchpad 104-1 is configured on the front of the mobile phone 100 in a full panel form, and the display screen 104-2 may also be configured on the front of the mobile phone 100 in a full panel form. In this way, a bezel-less structure can be implemented on the front of the mobile phone.

In this embodiment of this application, the mobile phone 100 may further have a fingerprint recognition function. For example, a fingerprint collection device 112 may be configured on the back of the mobile phone 100 (for example, below a rear-facing camera), or a fingerprint collection device 112 may be configured on the front of the mobile phone 100 (for example, below the touchscreen 104). For another example, a fingerprint collection device 112 may be configured on the touchscreen 104 to implement the fingerprint recognition function. In other words, the fingerprint collection device 112 and the touchscreen 104 may be integrated to implement the fingerprint recognition function of the mobile phone 100. In this case, the fingerprint collection device 112 is configured on the touchscreen 104, and may be a part of the touchscreen 104, or may be configured on the touchscreen 104 in another manner. In addition, the fingerprint collection device 112 may be further implemented as a full-panel fingerprint collection device. Therefore, the touchscreen 104 may be considered as a panel on which fingerprint recognition can be performed at any location. The fingerprint collection device 112 may send a collected fingerprint to the processor 101, so that the processor 101 processes the fingerprint (for example, performs fingerprint verification). A main component as the fingerprint collection device 112 in this embodiment of this application is a fingerprint sensor. The fingerprint sensor may use any type of sensing technology, including but not limited to an optical sensing technology, a capacitive sensing technology, a piezoelectric sensing technology, an ultrasonic sensing technology, and the like.

The mobile phone 100 may further include the Bluetooth apparatus 105, configured to implement data exchange between the mobile phone 100 and another short-range terminal (for example, a mobile phone or a smartwatch). In this embodiment of this application, the Bluetooth apparatus 105 may be an integrated circuit, a Bluetooth chip, or the like.

The mobile phone 100 may further include at least one sensor 106 such as a light sensor, a motion sensor, or another sensor. Specifically, the light sensor may include an ambient light sensor and a proximity sensor. The ambient light sensor may adjust luminance of the display screen of the touchscreen 104 based on brightness of ambient light, and the proximity sensor may turn off a power supply of the display screen when the mobile phone 100 moves to an ear. As one of motion sensors, an accelerometer sensor may detect acceleration magnitudes in all directions (usually on three axes), may detect a gravity magnitude and direction when the accelerometer sensor is stationary, and may be applied to an application for recognizing a mobile phone posture (for example, switching between a landscape screen and a portrait screen, a related game, and magnetometer posture calibration), a vibration recognition-related function (such as a pedometer and a knock), and the like. Other sensors such as a gyroscope, a barometer, a hygrometer, a thermometer, and an infrared sensor may be further configured in the mobile phone 100. Details are not described herein.

The Wi-Fi apparatus 107 is configured to provide, for the mobile phone 100, network access that complies with a Wi-Fi-related standard protocol. The mobile phone 100 may access a Wi-Fi access point by using the Wi-Fi apparatus 107, to help the user receive and send an email, browse a web page, access streaming media, and the like. The Wi-Fi apparatus 107 provides a wireless broadband internet access for the user. In some other embodiments, the Wi-Fi apparatus 107 may be used as a Wi-Fi wireless access point, and may provide Wi-Fi network access for another terminal.

The positioning apparatus 108 is configured to provide a geographic location for the mobile phone 100. It may be understood that the positioning apparatus 108 may be specifically a receiver of a positioning system such as a global positioning system (Global Positioning System, GPS for short), a BeiDou navigation satellite system, or a Russia GLONASS (GLOBAL NAVIGATION SATELLITE SYSTEM, global navigation satellite system). After receiving the geographic location sent by the positioning system, the positioning apparatus 108 sends the information to the processor 101 for processing, or sends the information to the memory 103 for storage. In some other embodiments, the positioning apparatus 108 may alternatively be a receiver of an assisted global positioning system (Assisted Global Positioning System, AGPS for short). The AGPS assists the positioning apparatus 108 in implementing ranging and positioning services as an assisted server. In this case, the assisted positioning server communicates with the positioning apparatus 108 (namely, a GPS receiver) of a terminal such as the mobile phone 100 by using a wireless communications network, to provide positioning assistance. In some other embodiments, the positioning apparatus 108 may be a positioning technology based on a Wi-Fi access point. Each Wi-Fi access point has a globally unique MAC address, and the terminal can scan and collect a broadcast signal of a surrounding Wi-Fi access point when Wi-Fi is enabled. Therefore, the terminal can obtain a MAC address broadcast by the Wi-Fi access point. The terminal sends, to a location server by using the wireless communications network, the data (for example, the MAC address) that can be used to indicate the Wi-Fi access point. The location server obtains a geographic location of each Wi-Fi access point through retrieval, obtains a geographic location of the terminal through calculation with reference to strength of the Wi-Fi broadcast signal, and sends the geographic location of the terminal to the positioning apparatus 108 of the terminal.

The audio circuit 109, a speaker 113, and a microphone 114 may provide an audio interface between the user and the mobile phone 100. The audio frequency circuit 109 may transmit, to the speaker 113, an electrical signal into which the received audio data is converted, and the speaker 113 converts the electrical signal into a sound signal for outputting. In addition, the microphone 114 converts the collected sound signal into an electrical signal. The audio circuit 109 receives the electrical signal, converts the electrical signal into audio data, and outputs the audio data to the RF circuit 102 to send the audio data to another mobile phone as an example, or outputs the audio data to the memory 103 for further processing.

The peripheral interface 110 is configured to provide various interfaces for an external input/output device (for example, a keyboard, a mouse, an external display, an external memory, or a subscriber identity module card). For example, the peripheral interface 110 is connected to the mouse through a universal serial bus (Universal Serial Bus, USB for short) interface, and is connected, by using a metal contact on a card slot of a subscriber identification module card, to a subscriber identification module (Subscriber Identification Module, SIM for short) card provided by a telecom operator. The peripheral interface 110 may be configured to couple the external input/output peripheral device to the processor 101 and the memory 103.

The mobile phone 100 may further include the power supply apparatus 111 (for example, a battery or a power supply management chip) that supplies power to the components. The battery may be logically connected to the processor 101 by using the power supply management chip, so that functions such as charging, discharging, and power consumption management are implemented by using the power supply apparatus 111.

Although not shown in FIG. 1, the mobile phone 100 may further include a camera (a front-facing camera and/or a rear-facing camera), a flashlight, a micro projection apparatus, a near field communication (near field communication, NFC for short) apparatus, and the like. Details are not described herein.

The terminal device such as the mobile phone 100 may be configured as a foldable terminal device. The foldable terminal device includes a flexible display screen. Specifically, the touchscreen 104 included in the mobile phone 100 is the flexible display screen. For example, the flexible display screen may be a flexible OLED (Organic Light-Emitting Diode, organic light-emitting diode) display screen, a flexible liquid crystal display (Liquid Crystal Display, LCD for short), or another type of flexible display screen.

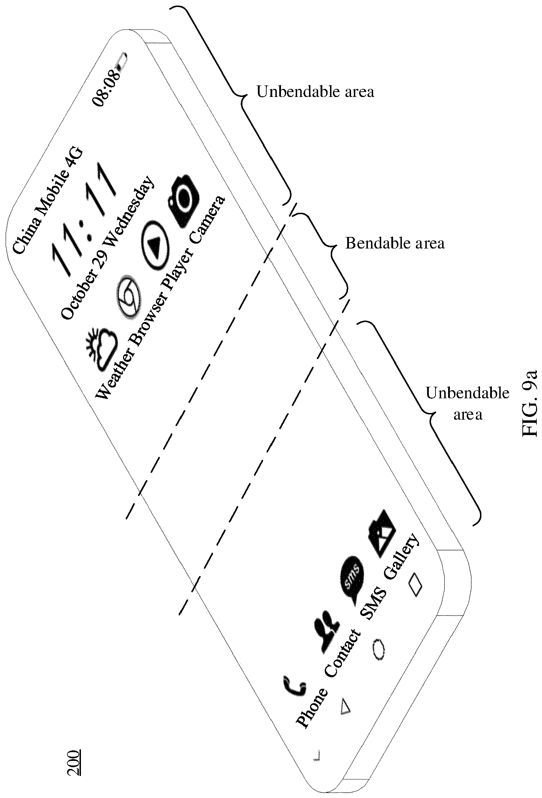

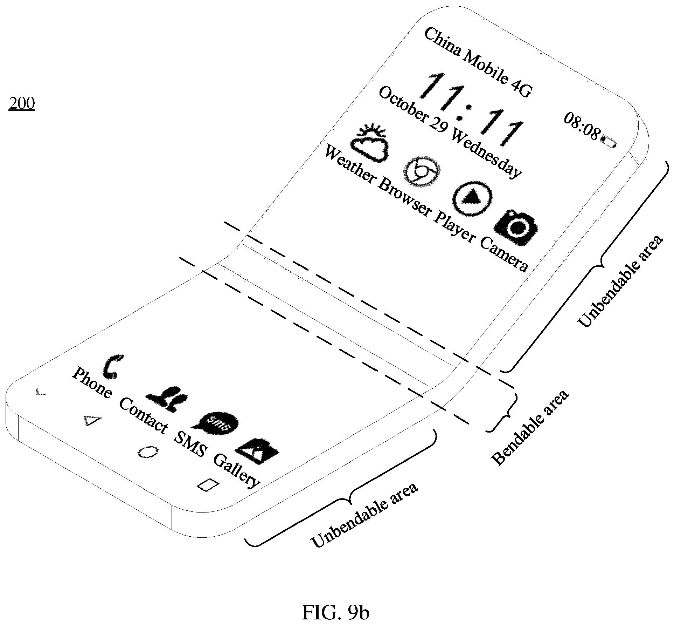

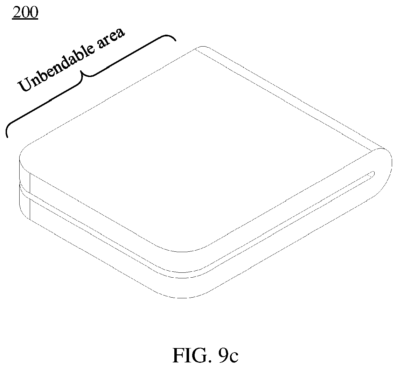

For example, referring to FIG. 9a to FIG. 9c, in some embodiments of this application, when a terminal device 200 is a mobile phone, the mobile phone includes a bendable area and an unbendable area. In this way, when the mobile phone is in a folded state (as shown in FIG. 9c), space occupied by the mobile phone may be relatively small, so as to help store and carry the mobile phone. When the mobile phone is in an unfolded state (as shown in FIG. 9a or FIG. 9b), the mobile phone may have a relatively large display area, to help a user operate and read the mobile phone.

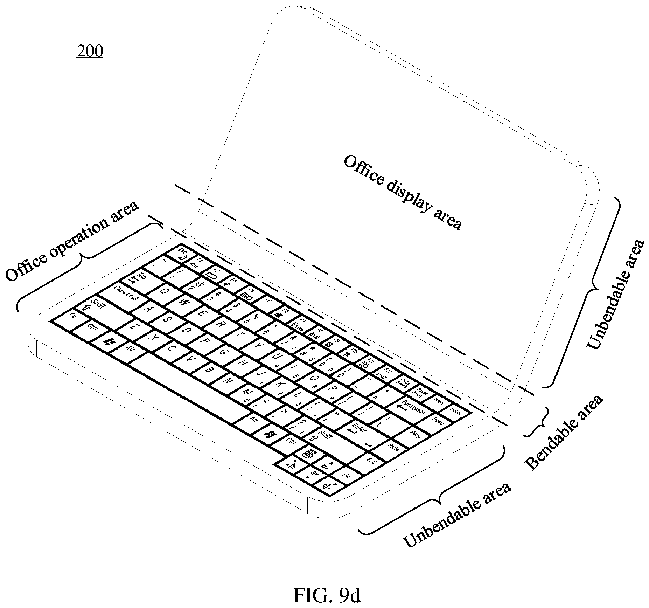

For another example, referring to FIG. 9d, in some other embodiments of this application, the terminal device 200 may alternatively be a tablet computer. When the tablet computer is in a bending state, if the tablet computer is bent towards a display surface, a part of the tablet computer may be horizontally placed and configured to display a keyboard, to form an office operation area, and the other part is inclined and configured to display an image or a text, to form an office display area, so as to help the user perform a mobile office operation or a game operation.

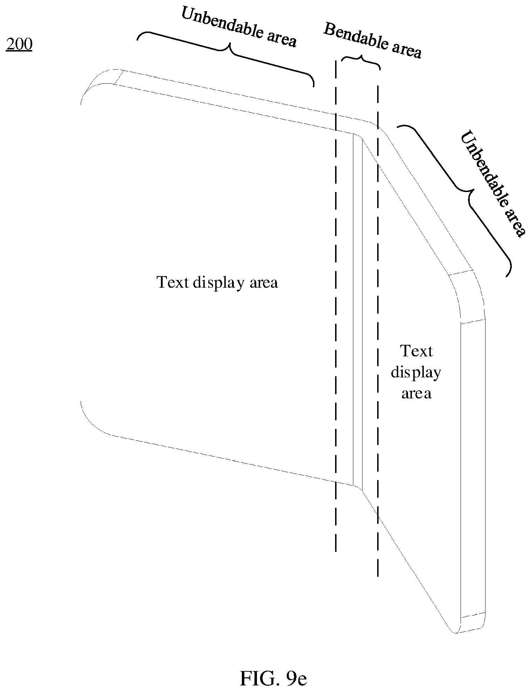

For another example, referring to FIG. 9e, in some other embodiments of this application, the terminal device 200 may alternatively be an electronic book. In this case, the electronic book is bent, so that the electronic book can better simulate a book folding effect.

Referring to FIG. 2a and FIG. 2b again, as described in the background, because a flexible display screen of a foldable terminal device is relatively flexible and has relatively low surface flatness, a flexible display screen 1 is supported by fitting a support sheet 2 on a back surface of a flexible display screen 1 (namely, a surface that is of the flexible display screen 1 and that is opposite to a display surface), so as to improve the surface flatness of the terminal device. However, if the support sheet 2 is excessively thick, a bending activity of the terminal device is limited. If the support sheet 2 is excessively thin, the surface flatness of the terminal device cannot be effectively improved.

As shown in FIG. 2c, in some related technologies, a relatively thick support sheet 2 is disposed in an unbendable area of a terminal device, and a relatively thin support sheet or no support sheet is disposed in a bendable area of the terminal device (FIG. 2c shows a case in which no support sheet is disposed in the bendable area). In this way, flatness of the unbendable area of the terminal device can be effectively improved without limiting a bending activity of the bendable area of the terminal device. However, because the support sheet disposed in the bendable area of the terminal device is relatively thin, or even no support sheet is disposed, surface flatness of the bendable area of the terminal device cannot be effectively improved, and a problem such as a wavy pattern still exists.

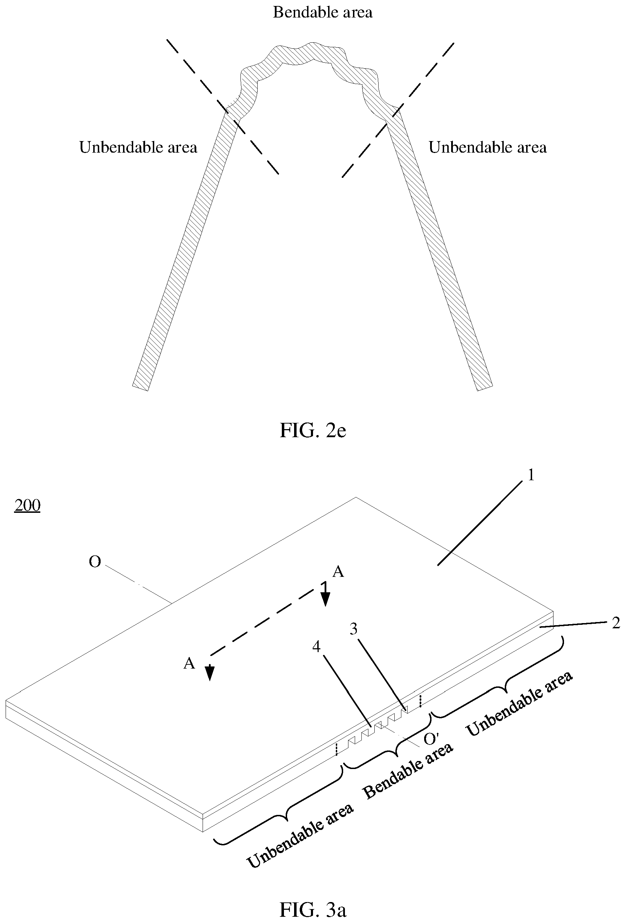

It should be noted that the surface flatness of the bendable area of the terminal device is a surface flatness degree when the bendable area of the terminal device is not bent and a surface smoothness degree when the bendable area is bent. Smoothness depends on whether a wavy pattern, roughness, or the like exists or does not exist on the surface when the bendable area is bent. The wavy pattern, the roughness, or the like on the surface when the bendable area is bent is inversely proportional to a surface smoothness degree and a surface flatness degree when the bendable area is bent. For example, as shown in FIG. 2d, if there is no wavy pattern on the surface when the bendable area of the terminal device is bent, the surface smoothness degree and the surface flatness degree are relatively high when the bendable area is bent. As shown in FIG. 2e, if there are many wavy patterns on the surface when the bendable area of the terminal device is bent, the surface smoothness degree and the surface flatness degree are relatively low when the bendable area is bent.

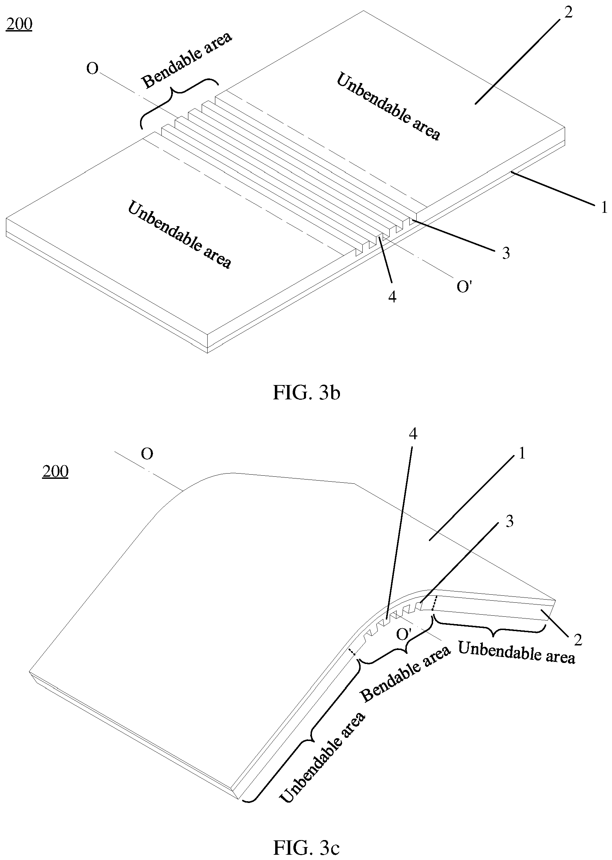

Based on the foregoing situation, as shown in FIG. 3a to FIG. 3d, an embodiment of this application provides a support sheet 2 and a terminal device 200. The support sheet 2 is disposed on one side of a flexible display screen 1 included in the terminal device 200. The support sheet 2 includes a bendable area, a plurality of gaps 3 are disposed in the bendable area of the support sheet 2, and an orientation of an opening of the gap 3 is the same as a bending direction of the bendable area. In this way, when the bendable area of the support sheet 2 is bent, the gap 3 can absorb stress generated when the bendable area is bent, so that a bending activity of the terminal device 200 is not limited. In addition, an area (namely, a non-gap area 4) in the bendable area of the support sheet 2 other than an area in which the gap 3 is located can enhance mechanical strength of the bendable area of the support sheet 2, so that a part that is of the flexible display screen 1 and that corresponds to the bendable area of the support sheet 2 is better supported. Further, if the support sheet 2 further has an unbendable area, the unbendable area of the support sheet 2 can support a corresponding area of the flexible display screen 1, so as to improve surface flatness of the unbendable area of the terminal device 200. Therefore, the entire surface flatness of the terminal device 200 is improved without limiting the bending activity of the terminal device 200.

For example, referring to FIG. 9a to FIG. 9c, in some embodiments of this application, when the terminal device 200 is a mobile phone, the support sheet provided in this embodiment of this application is disposed on one side of a flexible display screen of the mobile phone, so that both a bendable area and an unbendable area of the mobile phone can have relatively high flatness when the mobile phone is in a fully unfolded state (as shown in FIG. 9a) or in a semi-folded state (as shown in FIG. 9b), while the mobile phone can be bent. This avoids impact on image display of the mobile phone and an operation performed by a user on the mobile phone.

For example, referring to FIG. 9d, in some embodiments of this application, when the terminal device 200 is a tablet computer, the support sheet provided in this embodiment of this application is disposed on one side of a flexible display screen of the tablet computer, so that both a bendable area and an unbendable area of the tablet computer have relatively high flatness while the tablet computer can be bent. For example, when the tablet computer is used for mobile office, an office operation area and an office display area of the tablet computer may have relatively high flatness. This brings relatively good office experience to the user.

For example, referring to FIG. 9e, in some embodiments of this application, when the terminal device 200 is an electronic book, an unbendable area of the electronic book may be used as a text display area. The support sheet provided in this embodiment of this application is disposed on one side of a flexible display screen of the electronic book, so that the text display area of the electronic book has relatively high flatness while it is ensured that the electronic book has a relatively high book simulation effect. This may prevent a displayed text from being deformed because the text display area is bent, and help improve reading experience of the user.

Based on the foregoing basic application idea, the following describes the embodiments of this application in detail with reference to the accompanying drawings.

Referring to FIG. 3a to FIG. 3d again, an embodiment of this application provides a support sheet 2 and a terminal device 200. The terminal device 200 includes a flexible display screen 1, and the support sheet 2 is disposed on one side of the flexible display screen 1. The support sheet 2 includes at least one bendable area, and a plurality of gaps 3 are disposed in each bendable area. Each gap 3 has at least one opening, and a bending direction of at least one opening in each gap 3 is the same as a bending direction of the bendable area in which the gap 3 is located, so that when the support sheet 2 is bent towards the bending direction, the gap 3 in the support sheet 2 can absorb a stress generated by bending.

Referring to 3a and 3b, when the support sheet 2 is in a non-bending state, because the bendable area of the support sheet 2 includes the gap 3 and a non-gap area 4, the non-gap area 4 of the support sheet 2 has a certain thickness (the thickness may be equal to a thickness of the unbendable area of the support sheet 2). In this way, the non-gap area 4 of the support sheet 2 may be used to improve surface flatness of the bendable area of the terminal device 200. In addition, the unbendable area of the support sheet 2 has a specific thickness, and can support a corresponding area of the flexible display screen 1, so that the surface flatness of the bendable area of the terminal device 200 is improved.

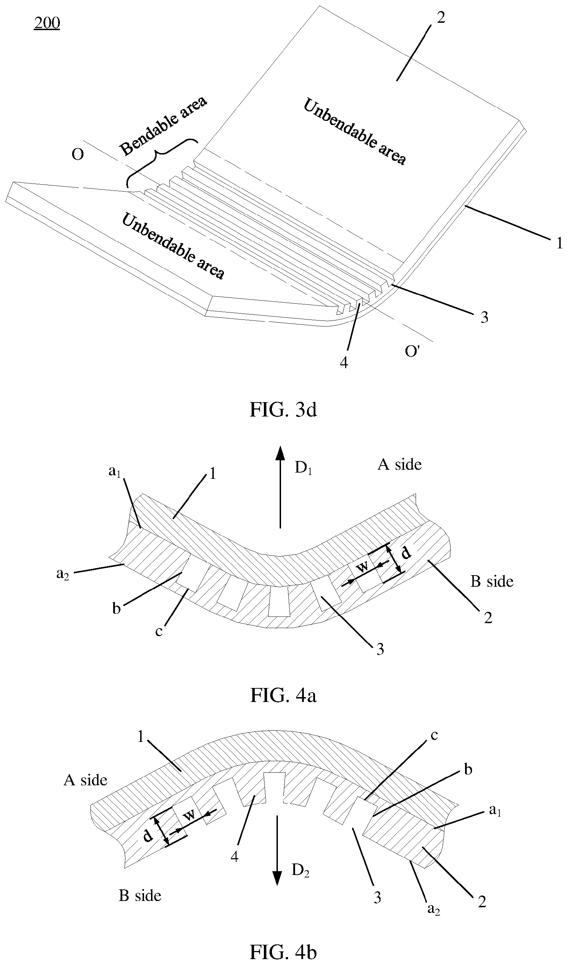

Referring to FIG. 3c and FIG. 3d, when the support sheet 2 is in the bending state, in the bendable area of the support sheet 2, the non-gap area 4 can be used to improve the surface flatness of the bendable area of the terminal device 200, and because the bendable area of the support sheet 2 includes the gap 3, and the gap 3 can absorb stress generated when the bendable area is bent, a bending activity of the bendable area of the terminal device 200 is not limited. In addition, the unbendable area of the support sheet 2 has a specific thickness, and can support a corresponding area of the flexible display screen 1, so that the surface flatness of the bendable area of the terminal device 200 is improved.

In some embodiments, the flexible display screen 1 is a screen displayed on one side, and includes a display surface and a back surface opposite to the display surface. As shown in FIG. 3a to FIG. 3d, in some embodiments of this application, the support sheet 2 is disposed on a back surface of the flexible display screen 1, to better support the flexible display screen 1, and avoid coverage to a picture displayed on the flexible display screen 1. In a possible design, the flexible display screen 1 and the support sheet 2 may be fixedly connected by pasting, bonding, welding, or the like.

As shown in FIG. 4a to FIG. 4d, it is assumed that in a direction perpendicular to a display surface of the terminal device 200, and two sides of the terminal device 200 are respectively an A side and a B side (equivalent to that in a direction perpendicular to a primary surface of the support sheet 2, two sides of the support sheet 2 are respectively a first side and a second side). A bending direction of the bendable area of the support sheet 2 is a direction D₁ that is perpendicular to the display surface of the terminal device and that faces the A side of the terminal device, or a direction D₂ that is perpendicular to the display surface of the terminal device and that faces the B side of the terminal device. For example, the terminal device 200 is a terminal device displayed on one side. The A side of the terminal device 200 is a display surface, and the B side is a back surface. A bending direction D₁ of the bendable area of the support sheet 2 is a bending direction towards the display surface, and a bending direction D₂ of the bendable area of the support sheet 2 is a direction towards the back surface (namely, a direction opposite to the display surface).

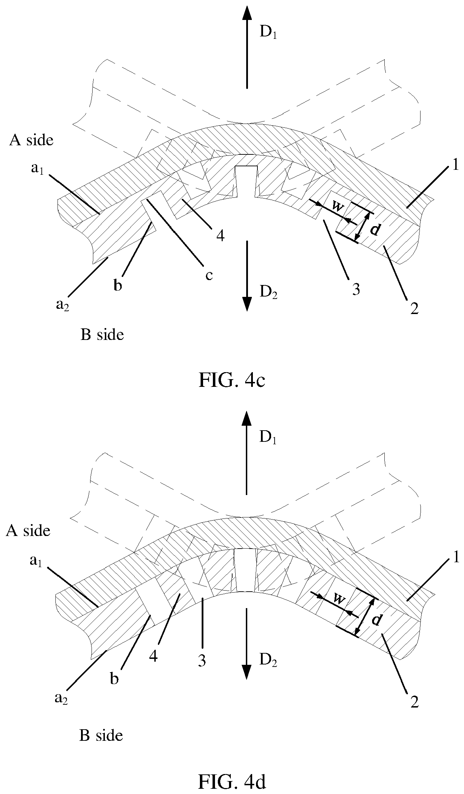

For any bendable area of the support sheet 2, in some embodiments, as shown in FIG. 4a and FIG. 4b, the bendable area has a bending direction D₁ or D₂, in other words, the bendable area may be bent in a unidirectional manner. In some other embodiments, as shown in FIG. 4c and FIG. 4d, the bendable area has two bending directions D₁ and D₂, in other words, the bendable area may be bent in a bidirectional manner.

Still referring to FIG. 4a to FIG. 4d, each gap 3 in this embodiment of this application has at least one opening. It may be understood that the gap 3 has one opening or two openings.

As shown in FIG. 4a to FIG. 4c, the gap 3 has one opening. The opening faces the A side or the B side of the terminal device 200, in other words, the opening faces the bending direction D₁ or D₂ of the bendable area. In other words, the gap 3 is a groove disposed in the bendable area of the support sheet 2. The gap 3 does not pass through two opposite primary surfaces a₁ and a₂ of the support sheet 2. In this case, a depth d of the gap 3 is less than a thickness of the support sheet.

It should be noted that the depth d of the gap 3 in this embodiment of this application is a size of the gap 3 in the direction perpendicular to the display surface of the terminal device 200. The depth d of the gap 3 may be designed based on a bending radian of the bendable area. If the bending radian of the bendable area is relatively large, it indicates that stress generated when the bendable area is bent is relatively large, and the depth d of the gap 3 may be designed to be relatively large, to facilitate absorbing more stress. If the bending radian of the bendable area is relatively small, it indicates that stress generated when the bendable area is bent is relatively small, and the depth d of the gap 3 may be designed to be relatively small. Optionally, a proportion of the depth d of the gap 3 to the thickness of the support sheet 2 ranges from 77/80 to 97/100. For example, the thickness of the support sheet 2 is 0.08 mm, and the depth d of the gap 3 is 0.077 mm. For another example, the thickness of the support sheet 2 is 0.10 mm, and the depth d of the gap 3 is 0.097 mm.

In addition, two opposite primary surfaces a₁ and a₂ of the support sheet 2 in this embodiment of this application respectively mean that a surface of the support sheet 2 that is in contact with the flexible display screen 1 and a surface of the support sheet 2 that is opposite to the foregoing surface. Locations of the two primary surfaces a₁ and a₂ are interchangeable.

In this design, the gap 3 can absorb stress generated when the bendable area is bent, which effectively ensures that the bending activity of the bendable area is not limited. In addition, the non-gap area 4 (namely, an area except an area in which the gap 3 is located) in the bendable area has a specific thickness. This helps improve mechanical strength of the bendable area. In addition, a primary surface that is on the support sheet 2 and that is not passed through by the gap 3 (in other words, a primary surface opposite to the primary surface in which the opening of the gap 3 is located) is a continuous surface. A support sheet material with a certain thickness exists between a bottom surface c of the gap 3 and the primary surface that is not passed through the gap 3 and that is of the support sheet 2, which helps further improve the mechanical strength of the bendable area. Therefore, on a premise that no limitation is imposed on the bending activity of the terminal device 200, a part that is of the flexible display screen 1 and that corresponds to the bendable area of the support sheet 2 is better supported, surface flatness of the bendable area of the terminal device 200 is improved, and entire surface flatness of the terminal device 200 is improved.

Based on a design that the gap 3 has one opening, for example, as shown in FIG. 4a, when openings on gaps 3 disposed in the bendable area face the A side of the terminal device 200, the bendable area of the support sheet 2 may be bent in a unidirectional manner, and a bending direction is D₁. As shown in FIG. 4b, when the openings on the gaps 3 disposed in the bendable area face the B side of the terminal device 200, the bendable area of the support sheet 2 may be bent in the unidirectional manner, and the bending direction is D₂. As shown in FIG. 4c, in the plurality of gaps 3 disposed in the bendable area, openings of a part of the gaps 3 face the A side of the terminal device 200, openings of the other part of the gaps 3 face the B side of the terminal device 200, and two parts of the gaps 3 are alternately arranged. Therefore, the bendable area of the support sheet 2 may be bent in a bidirectional manner, and bending directions are D₁ and D₂. Optionally, when the two parts of the gaps 3 are alternately arranged, intervals between any two adjacent gaps 3 are equal. This helps enable parts of the bendable area to have a consistent stress absorbing capability, so that stress of the parts of the bendable area is even when the bendable area is bent.

As shown in FIG. 4d, the gap 3 has two openings. One of the two openings is towards the A side of the terminal device 200, in other words, towards the bending direction D₁, and the other is towards the B side of the terminal device 200, in other words, towards the bending direction D₂. In other words, the gap 3 passes through two opposite primary surfaces a₁ and a₂ of the support sheet 2. In this case, the depth d of the gap 3 is equal to a thickness of the support sheet 2.

In this design, because the gap 3 passes through the two opposite primary surfaces a₁ and a₂ of the support sheet 2, a capability of the gap 3 to absorb stress generated when the bendable area is bent is higher, which can more effectively ensure that the bending activity of the bendable area is not limited. In addition, the non-gap area 4 in the bendable area has a specific thickness. This helps improve mechanical strength of the bendable area. Therefore, on a premise that no limitation is imposed on the bending activity of the terminal device 200, a part that is of the flexible display screen 1 and that corresponds to the bendable area of the support sheet 2 is better supported, surface flatness of the bendable area of the terminal device 200 is improved, and entire surface flatness of the terminal device 200 is improved.

In addition, the bendable area of the support sheet 2 is disposed with the gap 3 having two openings, so that the bendable area of the support sheet 2 can be bent in the bidirectional manner, and bending directions are D₁ and D₂.

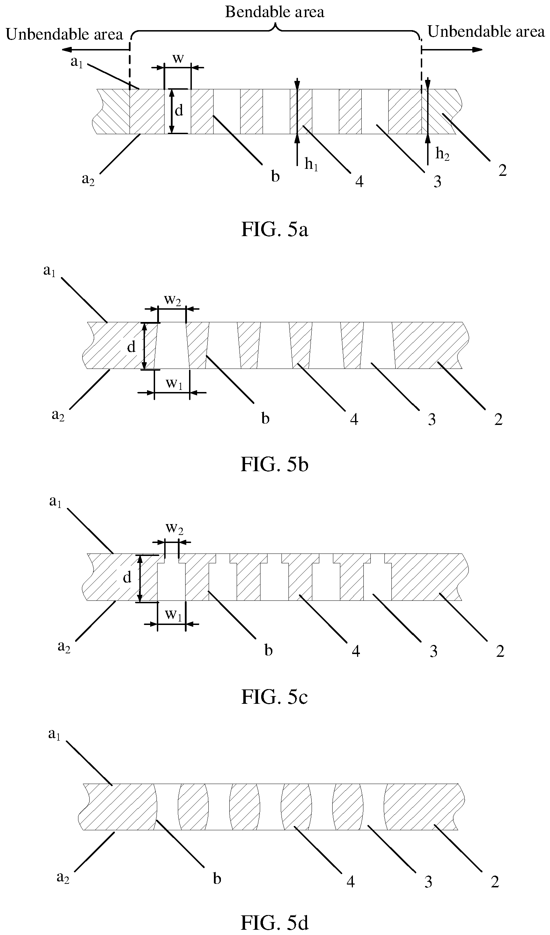

For a gap 3 having one opening, referring to FIG. 5a to FIG. 5k, a cross section shape of the gap 3 is not limited to a shape such as a rectangle, a trapezoid, a U-like shape, a semi-circle, a triangle, or an irregular shape. It should be noted that, the cross section shape of the gap 3 described in this embodiment of this application refers to: a cross section shape obtained after the gap 3 is truncated along a length extension direction perpendicular to a bendable area and perpendicular to a display surface of a terminal device (equivalent to a direction perpendicular to the length extension direction of the bendable area and perpendicular to the primary surface a₁ or a₂ of the support sheet 2). For example, as shown in FIG. 3a, the cross section shape of the gap 3 is a cross section shape obtained after the gap 3 is truncated along the cross section line AA'. The length extension direction of the bendable area is a direction parallel to a bending axis OO' of the bendable area. The length extension direction of the bendable area may be any direction parallel to a planar surface of the display surface of the terminal device 200. For example, the length extension direction of the bendable area is parallel to a horizontal direction of image display, or is parallel to a vertical direction of image display, or is an acute angle relative to the horizontal direction of image display.

Still referring to FIG. 5a to FIG. 5k, in a possible design, an inner side wall surface b of the gap may be a planar surface, a stepped surface, an arc surface, a curved surface, a wavy surface, or the like. It should be noted that the inner side wall surface b of the gap 3 in this embodiment of this application is a surface that is of the gap 3 and that is opposite to a side surface of the support sheet 2 (namely, a surface in the support sheet 2 other than the two primary surfaces a₁ and a₂).

For example, as shown in FIG. 5a, a depth d of the gap 3 is equal to the thickness of the support sheet 2. In other words, the gap 3 passes through two opposite primary surfaces a₁ and a₂ of the support sheet 2. A cross section shape of the gap 3 is a rectangle, and the inner side wall surface b of the gap 3 is a planar surface. In this way, the gap 3 has two openings, one opening is located on the primary surface a₁ of the support sheet 2, the other opening is located on the primary surface a₂ of the support sheet 2, and widths w of the two openings are equal. Because the gap 3 passes through the two opposite primary surfaces a₁ and a₂ of the support sheet 2, the gap 3 can absorb more stress during bending. In addition, because the two primary surfaces a₁ and a₂ of the support sheet 2 each have an opening of the gap 3, the bendable area in which the gap 3 is located can be bent in the bidirectional manner. Further, because the widths w of the two openings on the gap 3 are equal, bending radians of bidirectional bending on the bendable area in which the gap 3 is located are equal.

It should be noted that, the width w of the opening of the gap 3 in this embodiment of this application is a size of the gap 3 in an extension direction perpendicular to a length of the bendable area. The width w of the opening of the gap 3 may be designed based on the bending radian of the bendable area. If the bending radian of the bendable area is relatively large, it indicates that stress generated when the bendable area is bent is relatively large, and the width w of the opening of the gap 3 may be designed to be relatively large, to facilitate absorbing more stress. If the bending radian of the bendable area is relatively small, it indicates that stress generated when the bendable area is bent is relatively small, and the width w of the opening of the gap 3 may be designed to be relatively small.

For example, as shown in FIG. 5b, a depth of the gap 3 is equal to the thickness of the support sheet 2. In other words, the gap 3 passes through two opposite primary surfaces a₁ and a₂ of the support sheet 2. A cross section shape of the gap 3 is a trapezoid, and the inner side wall surface b of the gap 3 is a planar surface. In this way, the gap 3 has two openings, one opening is located on the primary surface a₁ of the support sheet 2, the other opening is located on the primary surface a₂ of the support sheet 2, and a width w₁ of one of the openings is greater than a width w₂ of the other opening. Because the gap 3 passes through the two opposite primary surfaces a₁ and a₂ of the support sheet 2, the gap 3 can absorb more stress during bending. In addition, because the two primary surfaces a₁ and a₂ of the support sheet 2 each have an opening of the gap 3, the bendable area in which the gap 3 is located can be bent in the bidirectional manner. Because widths of the two openings on the gap 3 are not equal, bending radians of bidirectional bending on the bendable area in which the gap 3 is located are not equal.

For example, as shown in FIG. 5c, the depth of the gap 3 is equal to the thickness of the support sheet 2. In other words, the gap 3 passes through two opposite primary surfaces a₁ and a₂ of the support sheet 2. A cross section shape of the gap 3 is a shape formed after two rectangles with different widths (namely, sizes of the rectangles in a direction parallel to the primary surface of the support sheet 2) are superposed, and the inner side wall surface of the gap 3 is a stepped surface. In this way, the gap 3 has two openings, one opening is located on the primary surface a₁ of the support sheet 2, the other opening is located on the primary surface a₂ of the support sheet 2, and a width w₁ of one of the openings is greater than a width w₂ of the other opening. Because the gap 3 passes through the two opposite primary surfaces a₁ and a₂ of the support sheet 2, the gap 3 can absorb more stress during bending. In addition, because the two primary surfaces a₁ and a₂ of the support sheet 2 each have an opening of the gap 3, the bendable area in which the gap 3 is located can be bent in the bidirectional manner. Because widths of the two openings on the gap 3 are not equal, bending radians of bidirectional bending on the bendable area in which the gap 3 is located are not equal.

Designs shown in FIG. 5b and FIG. 5c are applicable to a terminal device 200 having different bending radians of bidirectional bending in a bendable area. For example, if bending radians in two bending directions D₁ and D₂ of the bendable area are respectively α and β, and α is greater than β, it indicates that a stress generated by bending the bendable area towards the bending direction D₁ is greater than a stress generated by bending the bendable area towards the bending direction D₂. Therefore, a width of an opening that is of the gap 3 and that faces the bending direction D₁ may be greater than a width of an opening that faces the bending direction D₂, so that the opening that faces the bending direction D₁ absorbs more stress.

In some possible designs, if an inner side wall surface b of the gap 3 is a stepped surface, in a direction perpendicular to the primary surface of the support sheet 2, the inner side wall surface b of the gap 3 is not limited to including only one step (FIG. 5c shows that the side wall surface b includes one step), and the inner side wall surface b of the gap 3 may further include two or more steps. In other words, a cross section shape of the gap 3 is not limited to a shape formed after two rectangles with different widths are superposed, and may alternatively be a shape formed after two or more rectangles are sequentially superposed in the direction perpendicular to the primary surface of the support sheet 2. Widths of the two or more rectangles are sequentially increased or decreased in the direction perpendicular to the primary surface of the support sheet 2.

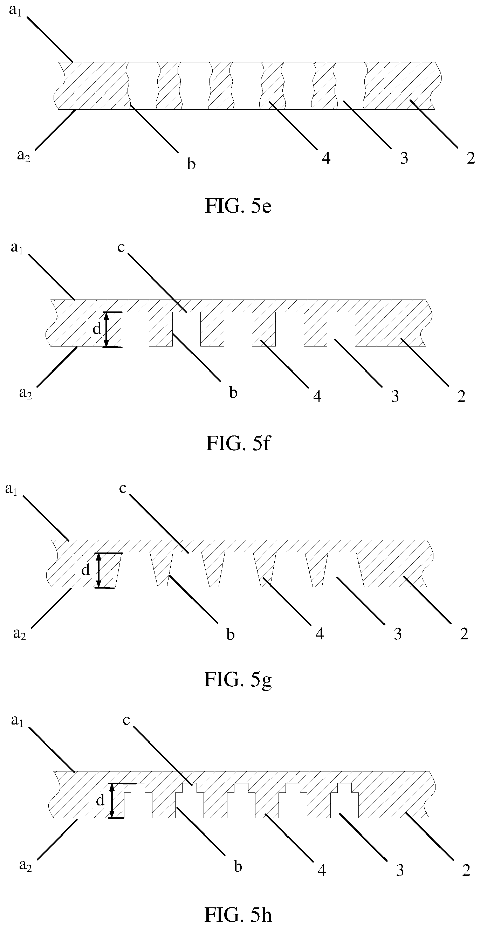

In this embodiment of this application, when the depth of the gap 3 is equal to the thickness of the support sheet 2, the side wall surface b of the gap 3 may be further configured as another structure. Referring to FIG. 5d, in some embodiments of this application, the side wall surface b of the gap 3 is an arc shape. Referring to FIG. 5e, in some other embodiments of this application, the side wall surface b of the gap 3 is wavy shape.

For example, as shown in FIG. 5f, a depth d of the gap 3 is less than the thickness of the support sheet 2. In other words, the gap 3 does not pass through two opposite primary surfaces a₁ and a₂ of the support sheet 2. A cross section shape of the gap 3 is a rectangle, and the inner side wall surface b of the gap 3 is a planar surface. In this way, the gap 3 has one opening, and the opening is located on a primary surface of the support sheet 2. The primary surface that is on the support sheet 2 and that is not passed through by the gap 3 is a continuous surface. Therefore, mechanical strength of the bendable area of the support sheet 2 can be further improved, so that surface flatness of the bendable area of the terminal device 200 is further improved.

For example, as shown in FIG. 5g, a depth d of the gap 3 is less than the thickness of the support sheet 2. In other words, the gap 3 does not pass through two opposite primary surfaces a₁ and a₂ of the support sheet 2. A cross section shape of the gap 3 is a trapezoid, and the inner side wall surface b of the gap 3 is a planar surface. In this way, the gap 3 has one opening, and the opening is located on a primary surface of the support sheet 2. Because an angle formed between the inner side wall surface of the gap 3 and a bottom surface of the gap 3 is an obtuse angle, that is, in a direction that is perpendicular to the primary surface of the support sheet 2 and that points from the primary surface in which the opening of the gap 3 is located to the bottom surface of the gap 3, the width of the opening gradually decreases. Therefore, the gap 3 can absorb stress generated when more bendable areas are bent.

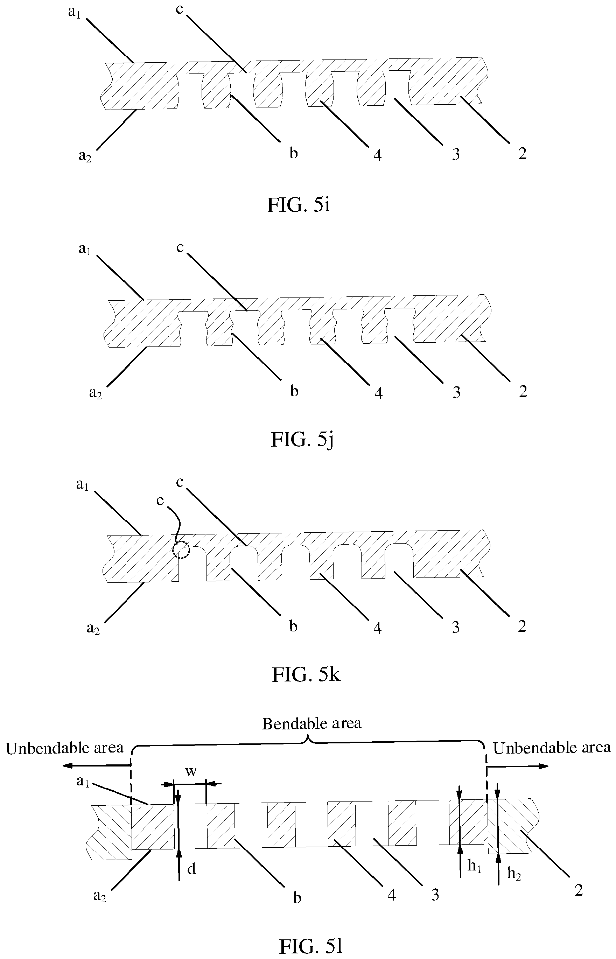

In this embodiment of this application, when the depth of the gap 3 is less than the thickness of the support sheet 2, the side wall surface b of the gap 3 may be further configured as another structure. Referring to FIG. 5h, in some embodiments of this application, the inner side wall surface b of the gap 3 is ladder-like. Referring to FIG. 5i, in some other embodiments of this application, the side wall surface b of the gap 3 is an arc shape. Referring to FIG. 5j, in still other embodiments of this application, the side wall surface b of the gap 3 is a wavy shape.

In a possible design, referring to FIG. 5k, smooth transition between the inner side wall surface b and a bottom surface c of the gap 3 is implemented. Optionally, a rounded angle is designed at an intersection position e of the inner side wall surface b and the bottom surface c of the gap 3, which can avoid stress concentration at a corner position at which the inner side wall surface b intersects with the bottom surface c, to reduce a loss caused by fatigue strength of the support sheet 2, and help improve a useful life of the support sheet 2.

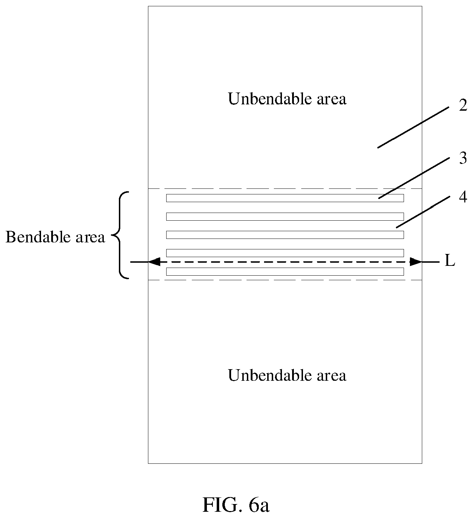

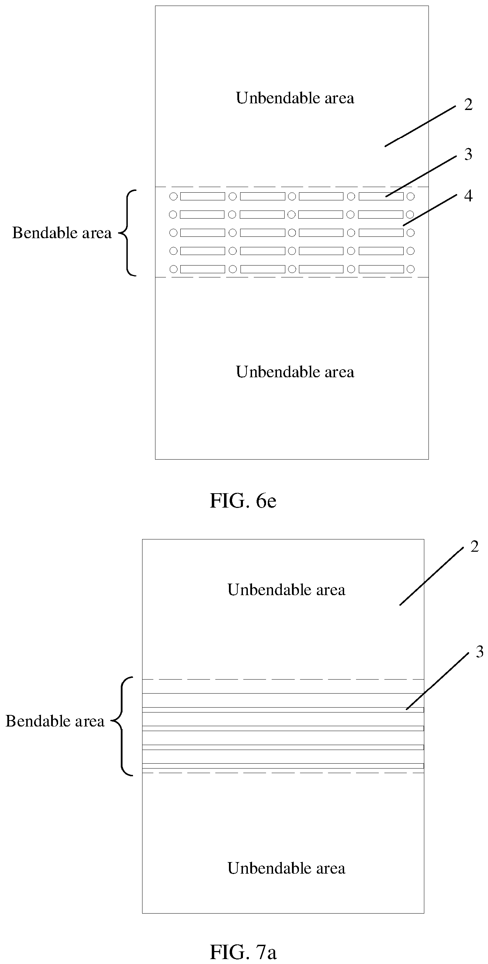

For a gap 3 having one opening, referring to FIG. 6a to FIG. 6e, and FIG. 7a to FIG. 7c, a planar surface shape of the gap 3 is not limited to a shape such as a strip shape, a hole shape, a rhombus shape, or an irregular shape. It should be noted that, the planar surface shape of the gap 3 in this embodiment of this application is a shape of an orthographic projection (equivalent to an orthographic projection on a primary surface a₁ or a₂ of a support sheet 2) of the gap 3 on a display surface of a terminal device. The planar surface shape of the gap 3 may be understood as a shape of an opening of the gap 3.

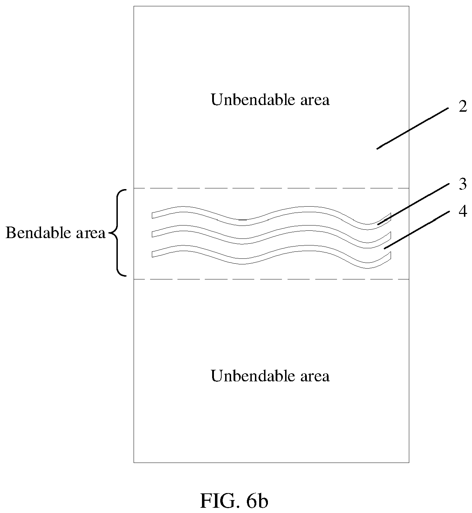

For example, referring to FIG. 6a and FIG. 6b, in some embodiments, the planar surface shape of the gap 3 is a strip shape, and may be specifically a strip shape of a straight line, a strip shape of a wave line, or the like. In a possible design, when the planar surface shape of the gap 3 is the strip shape, a length extension direction of the gap 3 is consistent with a length extension direction L of a bendable area in which the gap 3 is located. In addition, when the planar surface shape of the gap 3 is the strip shape, in the length extension direction L of gap 3, a width w of the gap 3 may remain constant or change. It should be noted that, if the width w of the gap 3 changes in the length extension direction of the gap 3, the width w of the gap 3 refers to an average width of the gap 3.

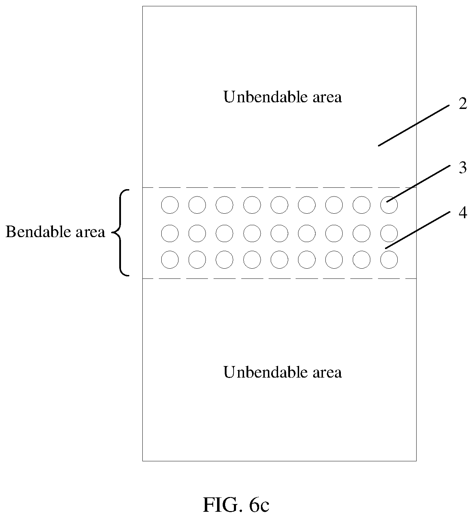

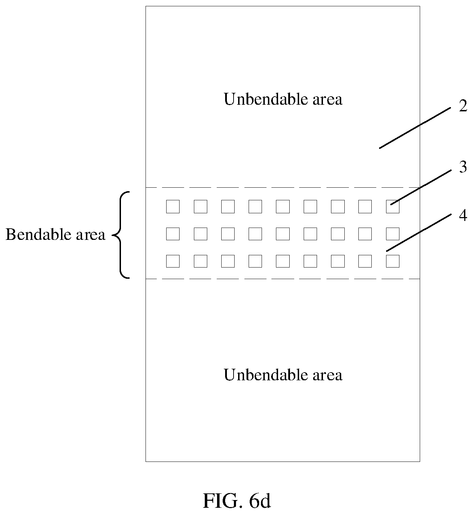

Referring to FIG. 6c and FIG. 6d, in some other embodiments, the planar surface shape of the gap 3 is a hole shape, for example, may be a circular hole shape, an elliptical hole shape, or a square hole shape. Particularly, when the planar surface shape of the gap 3 is the circular hole shape or the elliptical hole shape, no corner or sharp corner exists on an inner side wall surface of the gap 3, which avoids stress concentration at the corner or the sharp corner, so that the stress applied to the gap 3 is more even, which helps improve a useful life of the support sheet 2.

Referring to FIG. 6e, in some embodiments of this application, a plurality of gaps 3 disposed in the bendable area of the support sheet 2 include a plurality of gaps 3 whose planar surface shapes are strip shapes and a plurality of gaps 3 whose planar surface shapes are circular hole shapes or elliptical hole shapes, in addition, the plurality gaps 3 disposed in the bendable area are arranged in a plurality of rows. Each row of gaps 3 includes at least one gap in a strip shape and a plurality of gaps in a circular hole shape or in an elliptical hole shape, and at least one gap in a circular hole shape or in an elliptical hole shape is separately disposed on two sides of each strip shape gap. In this way, while it is ensured that the plurality of gaps 3 disposed in the bendable area can absorb stress to a relatively large extent, stress concentration at a corner or a sharp corner of the inner side wall surface of the strip shape gap 3 is reduced, which avoids breaking of the bendable area from the strip shape gap 3 after being bent for a plurality of times, and improves the useful life of the support sheet 2.

For a bendable area that can only be bent in one direction and that is of a support sheet 2, referring to FIG. 7a to FIG. 7c, an arrangement pattern of a plurality of gaps 3 disposed in the bendable area may be randomly disposed based on an actual requirement.

For example, as shown in FIG. 7a, a plurality of mutually parallel strip shape gaps 3 are disposed in the bendable area, and a length extension direction of each gap 3 is parallel to a length extension direction of the bendable area. Optionally, a depth of each gap 3 is less than a thickness of the support sheet 2, in other words, each gap 3 is a groove disposed in the support sheet 2 in the bendable area. Further, gaps between every two adjacent gaps 3 in the plurality of gaps 3 are equal. In this way, stress absorbed by each area in the bendable area is more uniform, which better supports a bending activity of the terminal device 200.

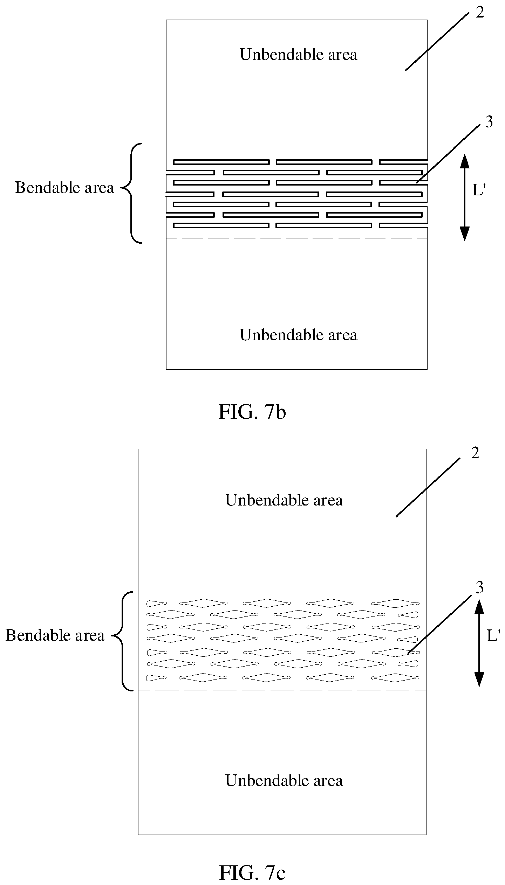

For example, as shown in FIG. 7b, a plurality of rows of mutually parallel gaps 3 are disposed in the bendable area, and each row includes a plurality of parallel strip shape gaps that are arranged at intervals. Optionally, a depth of each gap 3 is equal to a thickness of the support sheet 2. In other words, each gap 3 passes through two opposite primary surfaces a₁ and a₂ of the bendable area of the support sheet 2. Further, along a direction L' perpendicular to the length extension direction of the bendable area, a plurality of gaps 3 included in two adjacent rows of gaps 3 are arranged in a staggered manner, which helps improve mechanical strength of the bendable area. Therefore, a part that is of the flexible display screen 1 and that corresponds to the bendable area of the support sheet 2 is better supported, and surface flatness of the terminal device 200 is improved.

For example, as shown in FIG. 7c, a plurality of rows of gaps 3 that are parallel to each other are disposed in the bendable area, and each row of gaps 3 includes a plurality of gaps 3 that are in a rhombus shape and that are arranged at intervals. An arrangement direction of the plurality of gaps 3 in a rhombus shape included in each row is parallel to the length extension direction of the bendable area. Optionally, a depth of each rhombus shape gap 3 is equal to the thickness of the support sheet 2. In other words, each gap 3 passes through two opposite primary surfaces a₁ and a₂ of the bendable area of the support sheet 2. Further, along a direction L' perpendicular to the length extension direction of the bendable area, a plurality of gaps 3 in a rhombus shape included in two adjacent rows of rhombus shape gaps 3 are arranged in a staggered manner, which helps improve mechanical strength of the bendable area. Therefore, a part that is of the flexible display screen 1 and that corresponds to the bendable of the support sheet 2 is better supported, and surface flatness of the terminal device 200 is improved.

In this embodiment of this application, the rhombus shape gap 3 may be a standard rhombus shape. The rhombus shape gap 3 may alternatively be similar to a shape of the standard rhombus. For example, referring to FIG. 7c again, a shape that is a circular arc transition surface and that is similar to the standard rhombus is disposed at sharp corners of two ends of the standard rhombus, which can avoid stress accumulation at the sharp corners of two ends of the rhombus shape gap 3. In this way, breaking of the bendable area of the support sheet 2 is avoided after the bendable area is bent for a plurality of times, and a useful life of the support sheet 2 is improved.

In addition, each row of gaps 3 may include a partial rhombus shape gap 3 in addition to a complete rhombus shape gap 3. For example, referring to FIG. 7c again, each row of gaps 3 includes a half of the rhombus shape gap 3. In this way, more gaps 3 can be arranged in the bendable area, which further improves bending performance of the support sheet 2.

For example, referring to FIG. 6e again, a plurality of rows of gaps 3 that are parallel to each other are disposed in the bendable area, and each row includes the plurality of gaps 3 that are arranged at intervals. An arrangement direction of the plurality of gaps 3 included in each row is parallel to the length extension direction of the bendable area. Each row includes at least one gap 3 in a strip shape and a plurality of gaps 3 in a circular hole shape or in an elliptical hole shape, and at least one gap in a hole shape is separately disposed on two sides of each strip shape gap. Further, in the plurality of gaps 3 included in each row, the strip shape gap 3 and the circular hole shape gap 3 or the elliptical hole shape gap 3 are alternately arranged at intervals, and two ends of an outermost side of each row are the circular hole shape gaps 3 or the elliptical hole shape gaps 3. In this arrangement, while it is ensured that the plurality of gaps 3 disposed in the bendable area can absorb stress to a relatively large extent, stress concentration at a corner or a sharp corner of the inner side wall surface of the strip shape gap 3 is reduced, which avoids breaking of the bendable area from the strip shape gap 3 after being bent for a plurality of times, and improves the useful life of the support sheet 2.

It should be noted that an arrangement density of the plurality of gaps 3 in the bendable area of the support sheet 2 may be designed based on an actual requirement. If the bending radian of the bendable area is relatively large, it indicates that stress generated when the bendable area is bent is relatively large, and the arrangement density of the plurality of gaps 3 may be designed to be relatively large, to facilitate absorbing more stress. If the bending radian of the bendable area is relatively small, it indicates that stress generated when the bendable area is bent is relatively small, and the arrangement density of the plurality of gaps 3 may be designed to be relatively small.

In some embodiments, as shown in FIG. 5a and FIG. 5l, a support sheet 2 further includes at least one unbendable area, and a thickness h₁ of a non-gap area 4 in a bendable area of the support sheet 2 is less than or equal to a thickness h₂ of the unbendable area of the support sheet 2. In this design, a part that is of a flexible display screen 1 and that corresponds to the unbendable area of the support sheet 2 can be well supported, to help improve flatness of the flexible display screen 1. In addition, on a premise of improving mechanical strength of the bendable area of the support sheet 2, bending performance of the support sheet can be improved, so that the support sheet 2 has a relatively large bending angle.

For example, as shown in FIG. 5a, the thickness h₁ of the non-gap area 4 in the bendable area of the support sheet 2 is equal to the thickness h₂ of the unbendable area of the support sheet 2. In this way, mechanical strength of the bendable area 21 of the support sheet 2 is improved.

For example, as shown in FIG. 5l, the thickness h₁ of the non-gap area 4 in the bendable area of the support sheet 2 is less than the thickness h₂ of the unbendable area of the support sheet 2. In this way, on a premise of improving the mechanical strength of the bendable area, bending performance of the support sheet can be improved, so that the support sheet 2 has a relatively large bending angle. It should be noted that the thickness h₁ of the non-gap area 4 in the bendable area may be thinned in a manner such as dry etching, wet etching, or laser etching.

In the terminal device 200 provided in this embodiment of this application, the plurality of gaps 3 are disposed in the bendable area of the support sheet 2 to absorb stress generated when the terminal device 200 is bent. In this way, even if the thickness of the support sheet is set to be relatively large, it can also be ensured that a bending activity of the terminal device 200 is not limited. Therefore, the thickness of the support sheet 2 may be properly increased without limiting the bending activity of the terminal device 200, to further enhance the mechanical strength of the support sheet 2, so that the support sheet can better improve surface flatness of the terminal device 200. Optionally, the thickness of the support sheet is greater than 0.05 mm. Further, the thickness of the support sheet 2 is greater than 0.05 mm and less than or equal to 0.5 mm.

In this embodiment of this application, the gap 3 in the support sheet 2 may be processed in a plurality of manners. In some embodiments, the gap 3 may be produced by removing a material of a part, in the support sheet 2, of the gap 3 to be formed. For example, the gap 3 may be produced by using a process such as laser etching molding, plasma etching molding, or wet etching molding. Stress on each position of the support sheet 2 that is obtained through production in this manner is even, and surface flatness is high.

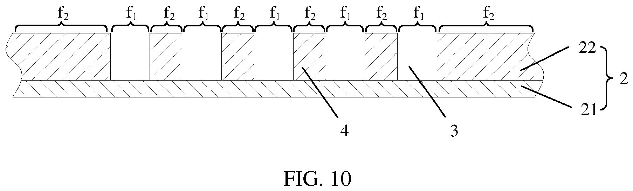

Referring to FIG. 10, in some other embodiments, a support sheet 2 may be produced by superimposing a plurality of layers of base materials. For example, a first base material 21 is first provided, and then a second base material 22 is superposed on a side surface of the first base material 21. The second base material 22 includes a hollow area f₁ and a non-hollow area f₂. The hollow area f₁ corresponds to an area in which a gap 3 is to be formed in the support sheet 2, and the non-hollow area f₂ corresponds to a non-gap area 4 in the support sheet 2. The second base material 22 is hollowed out in the area in which the gap 3 is to be formed in the support sheet 2, so that a thickness of the area in which the gap 3 is to be formed of the support sheet 2 is a thickness of the first base material 21. The second base material 22 is not hollowed out in the non-gap area 4 of the support sheet 2, in this way, a thickness of the non-gap area 4 in the support sheet 2 reaches a thickness of a to-be-formed support sheet 2, thereby forming the support sheet 2 with a required gap 3. The gap 3 that is produced in this manner and that is of the support sheet 2 is a gap 3 having one opening, in other words, a gap 3 that does not pass through two primary surfaces of the support sheet 2. In addition, stress on each position of the support sheet 2 that is obtained through production in this manner is even, and surface flatness is high. The first base material 21 and the second base material 22 may be connected to each other through bonding, diffusion molding, or the like.

In addition, in some other embodiments, the gap 3 may alternatively be produced in another processing manner. For example, the gap 3 may be produced in a manner such as roll molding or mechanical cutting molding. Details are not described one by one herein again.

In this embodiment of this application, any material having specific mechanical strength may be selected as a material of the support sheet 2. Optionally, the material of the support sheet uses a material that has high mechanical strength, good surface flatness, and strong bending performance. For example, the support sheet 2 is a metal support sheet. Further, the support sheet 2 is a stainless steel support sheet or a copper support sheet.

Referring to FIG. 3a to FIG. 3d, in some embodiments of this application, in addition to at least one bendable area, the support sheet 2 may further include at least one unbendable area, and the unbendable area is connected to the bendable area. A thickness of the unbendable area is equal to a thickness of the non-gap area 4 in the bendable area. In this way, a part that is of a flexible display screen 1 and that corresponds to the unbendable area of the support sheet 2 can also be well supported, which improves flatness of an entire display surface of the terminal device 200.

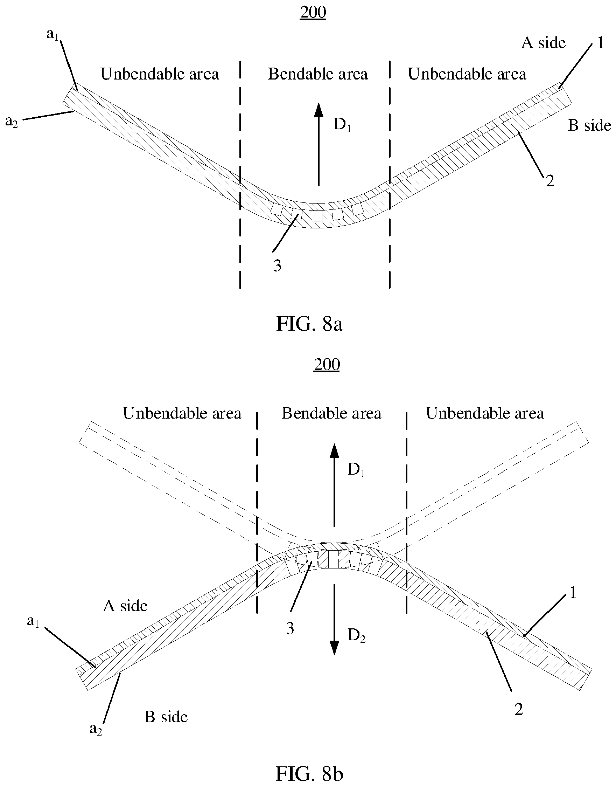

In this embodiment of this application, there may be a plurality of bending forms of the terminal device 200, and a design of the gap in the support sheet 2 needs to meet a requirement of a corresponding bending form. Referring to FIG. 8a to FIG. 8f, the following describes several bending forms and possible designs of a gap in a corresponding support sheet 2.

For example, referring to FIG. 8a, the support sheet 2 of the terminal device 200 has a bendable area, and the bendable area can be bent towards a bending direction D₁ or D₂ (in FIG. 8a, the bending direction of the bendable area is D₁). In this case, to ensure that a bending activity of the terminal device 200 is not limited, a plurality of gaps 3 in the bendable area of the support sheet are disposed at an interval. Each gap 3 may use a structure that two primary surfaces a₁ and a₂ of the support sheet 2 are not passed through. An opening of each gap 3 faces a bending direction of the terminal device 200.

For example, referring to FIG. 8b, the support sheet 2 of the terminal device 200 has a bendable area, and the bendable area can be bent towards the bending direction D₁ and D₂. In this case, to ensure that the bending activity of the terminal device 200 is not limited, the plurality of gaps 3 in the bendable area of the support sheet are disposed at an interval. Each gap 3 may use a structure that two primary surfaces a₁ and a₂ of the support sheet 2 are passed through. Two openings of each gap 3 separately face two bending directions of the terminal device 200.

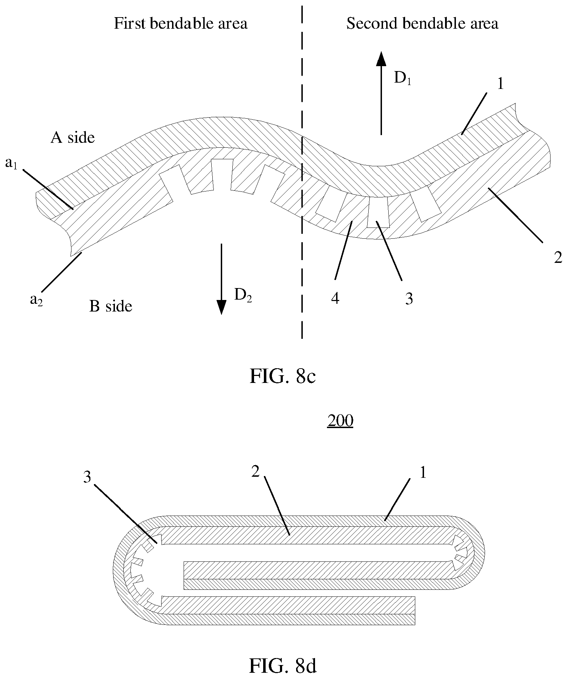

For example, referring to FIG. 8c, the support sheet 2 of the terminal device 200 has two bendable areas, and one of the bendable areas can be bent towards the bending direction D₁ (for example, a second bendable area in FIG. 8c), another bendable area can be bent towards the D₂ (for example, a first bendable area in FIG. 8c). In this case, to ensure that the bending activity of the terminal device 200 is not limited, in the bendable area in which the support sheet 2 can be bent towards the bending direction D₁, each gap 3 may use the structure that two primary surfaces a₁ and a₂ of the support sheet 2 are not passed through, and the opening of each gap 3 faces the bending direction D₁. In addition, in the bendable area in which the support sheet 2 can be bent towards the bending direction D₂, each gap 3 may use the structure that two primary surfaces a₁ and a₂ of the support sheet 2 are not passed through, and the opening of each gap 3 faces the bending direction D₂.

For example, referring to FIG. 8d, the support sheet 2 of the terminal device 200 has two bendable areas, and a bending radian of one of the bendable areas is greater than a bending radian of another bendable area. In this way, the terminal device 200 can be bent in folding. In this case, the bending radian of one of the bendable areas may be greater than the bending radian of the other bendable area by designing parameters such as an area of the bendable area, a quantity of gaps 3 in the bendable area, an arrangement density of the gaps 3 in the bendable area, a direction of the opening of the gap 3, a depth of the gap 3, and a width of the gap 3.

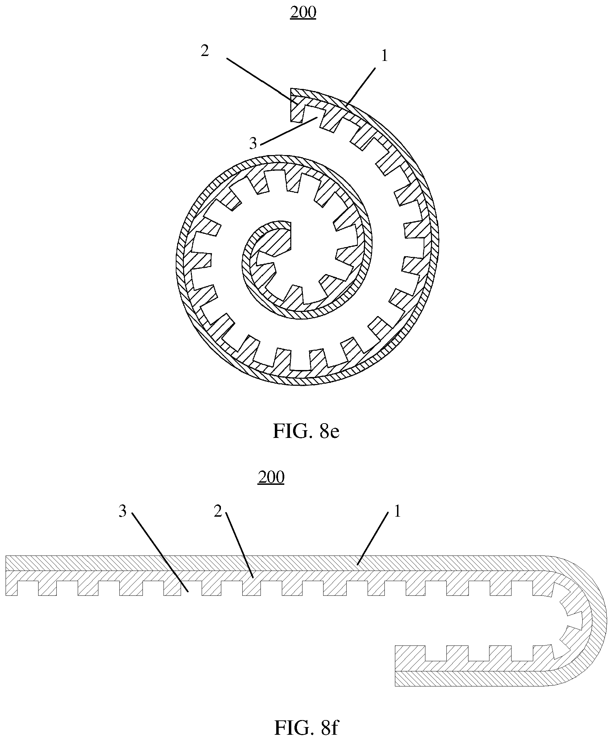

For example, referring to FIG. 8e, all or most parts of the support sheet 2 of the terminal device 200 are bendable areas. The terminal device 200 can be bent in scrolling, and the terminal device 200 may form a shape similar to a shape of a scroll when the terminal device 200 is bent in scrolling. From an end that is of the support sheet 2 and that is located at a center of the scroll to an end that is on an outermost side of the scroll, a bending radian of the bendable area of the support sheet 2 gradually decreases. In this case, the bending radian of the bendable area of the support sheet 2 gradually decreases from the center of the scroll to the outermost side of the scroll by designing parameters such as a quantity of gaps 3 in the bendable area, an arrangement density of the gaps 3 in the bendable area, a direction of an opening of the gap 3, a depth of the gap 3, and a width of the gap 3.

For example, referring to FIG. 8f, all or most parts of the support sheet 2 of the terminal device 200 are bendable areas. The terminal device 200 can be bent in sliding, and that the terminal device 200 is bent in sliding is similar to movement of a chain in a wheel. Parts of the bendable areas of the support sheet can be bent at a same bending radian. In this case, bending radians of parts of the bendable areas of the support sheet 2 may be the same by designing parameters such as a quantity of gaps 3 in the bendable area, an arrangement density of the gaps 3 in the bendable area, a direction of an opening of the gap 3, a depth of the gap 3, and a width of the gap 3.

It should be noted that, in this embodiment of this application, a bending form of the terminal device 200 is not limited to the foregoing several types. A plurality of other bending forms can be implemented by designing a cross section shape, a planar surface shape, a depth, a width, an arrangement pattern, an arrangement density, and the like of the gap in the support sheet 2, and by designing and combining a quantity of bendable areas, a quantity of unbendable areas, an area of the bendable area, a bending radian of the bendable area, a length extension direction of the bendable area, and the like in the support sheet 2. Details are not described one by one herein again.

In addition, it should be noted that, for the terminal device 200 provided in this embodiment of this application, when the terminal device 200 is unfolded to a planar surface state after being bent, because the gap 3 is disposed in the bendable area of the support sheet 2, and the gap 3 may completely and thoroughly release stress generated by the support sheet 2 in a bending process, so that less stress remains in the unfolded support sheet 2, or even no stress remains, which avoids a problem of residual stress and accumulation of the support sheet 2 after being bent and then unfolded, resolves a problem that the terminal device is deformed and arched caused by the problem of residual stress and accumulation of the support sheet 2 after being bent and then unfolded, and improves flatness of a surface after the terminal device 200 is bent and then unfolded. It can be learned that not only flatness of an entire surface of the terminal device 200 provided in this embodiment of this application is high, but also the bending activity is not limited. In addition, the surface in a state after the terminal device 200 is bent and then unfolded is not arched, and flatness is also relatively high. Therefore, an image display effect of the terminal device 200 in the foregoing two states is relatively good.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A support sheet, wherein the support sheet comprises at least one bendable area, a plurality of gaps are disposed in the at least one bendable area, each gap has at least one opening, and an orientation of at least one opening of each gap is the same as a bending direction of a bendable area in which the gap is located.

2. The support sheet according to claim 1, wherein the gap passes through two opposite primary surfaces of the bendable area of the support sheet.

3. The support sheet according to claim 1, wherein the gap is a groove disposed in the bendable area of the support sheet.

4. The support sheet according to claim 3, wherein the gap comprises a bottom surface and an inner side wall surface, and smooth transition exists between the bottom surface and the inner side wall surface.

5. The support sheet according to claim 3, wherein a proportion of a depth of the gap to a thickness of the support sheet ranges from 77/80 to 97/100.

6. The support sheet according to claim 1, wherein a cross section shape of the gap is a rectangle, a trapezoid, a U-like shape, a semicircle, or a triangle, and the cross section shape is a cross section shape obtained after the gap is truncated along a length extension direction perpendicular to the bendable area in which the gap is located and in a direction perpendicular to a primary surface of the support sheet.

7. The support sheet according to claim 1, wherein an inner side wall surface of the gap is a planar surface, a stepped surface, an arc surface, a curved surface, or a wavy surface.

8. The support sheet according to claim 1, wherein a planar surface shape of the gap is a strip shape, a hole shape, or a rhombus shape, and the planar surface shape of the gap is a shape of an orthographic projection of the gap on a primary surface of the support sheet.

9. The support sheet according to claim 8, wherein a plurality of parallel strip shape gaps are disposed in the bendable area, and a length extension direction of each gap is parallel to a length extension direction of the bendable area.

10. The support sheet according to claim 8, wherein a plurality of rows of gaps are disposed in the bendable area, each row of gaps comprises a plurality of gaps that are arranged at intervals, and an arrangement direction of the plurality of gaps comprised in each row of gaps is parallel to a length extension direction of the bendable area;
each gap is a strip shape; or
each gap is a circular hole shape or an elliptical hole shape; or
each row of gaps comprises at least one gap in a strip shape and a plurality of gaps in a circular hole shape or in an elliptical hole shape, and at least one gap in a circular hole shape or in an elliptical hole shape is separately disposed on two sides of each strip shape gap; or
each row of gaps comprises a plurality of gaps in a rhombus shape.

11. The support sheet according to claim 10, wherein a plurality of gaps comprised in two adjacent rows of gaps are disposed in a staggered manner along a direction perpendicular to the length extension direction of the bendable area.

12. The support sheet according to claim 1, wherein the support sheet further comprises at least one unbendable area, and a thickness of a non-gap area in the bendable area of the support sheet is less than or equal to a thickness of the unbendable area of the support sheet.

13. The support sheet according to claim 1, wherein in a direction perpendicular to a primary surface of the support sheet, and two sides of the support sheet are respectively a first side and a second side, the bendable area can be bent towards the first side or the second side; and in the plurality of gaps disposed in the bendable area,
each gap passes through two opposite primary surfaces of the bendable area; or
each gap is a groove disposed in the bendable area, and an opening of each gap faces the first side or the second side.

14. The support sheet according to claim 1, wherein in a direction perpendicular to a primary surface of the support sheet, two sides of the support sheet are respectively a first side and a second side, and the bendable area can be separately bent towards the first side and the second side; and in the plurality of gaps disposed in the bendable area,
each gap passes through two opposite primary surfaces of the bendable area; or
each gap is a groove disposed in the bendable area, wherein openings of some gaps face the first side, openings of some other gaps face the second side, and the gaps whose openings face the first side and the gaps whose openings face the second side are alternately arranged at intervals.

15. The support sheet according to claim 1, wherein the plurality of gaps disposed in the bendable area of the support sheet are a plurality of gaps produced by using an etching process; or
the support sheet comprises a first base material and a second base material superposed on a side surface of the first base material, and an area that is of the second base material and that corresponds to a to-be-formed gap area is hollowed out, to cooperate with the first base material to form the plurality of gaps disposed in the bendable area of the support sheet.

16. The support sheet according to claim 1, wherein a thickness of the support sheet is greater than 0.05 mm and less than or equal to 0.5 mm.

17. A terminal device, comprising a flexible display screen and a support sheet disposed on one side of the flexible display screen, wherein the support sheet is the support sheet according to any one of claims 1 to 16.
